(19) Europäisches Patentamt
European Patent Office
Office européen des brevets

(11) Veröffentlichungsnummer: **0 084 849**
**B1**

# (12) EUROPÄISCHE PATENTSCHRIFT

(45) Veröffentlichungstag der Patentschrift: **14.05.86**

(51) Int. Cl.⁴: **C 09 B 62/095,** C 09 B 62/515, D 06 P 3/66, D 06 P 3/16

(21) Anmeldenummer: **83100433.8**

(22) Anmeldetag: **19.01.83**

## (54) Wasserlösliche Kupferkomplex-Disazoverbindungen, Verfahren zu deren Herstellung und ihre Verwendung als Farbstoffe.

(30) Priorität: **23.01.82 DE 3202120**

(43) Veröffentlichungstag der Anmeldung: **03.08.83 Patentblatt 83/31**

(45) Bekanntmachung des Hinweises auf die Patenterteilung: **14.05.86 Patentblatt 86/20**

(84) Benannte Vertragsstaaten: **CH DE FR GB IT LI**

(56) Entgegenhaltungen:
**EP - A - 0 040 790**
**EP - A - 0 040 806**

**Die Akte enthält technische Angaben, die nach dem Eingang der Anmeldung eingereicht wurden und die nicht in dieser Patentschrift enthalten sind.**

(73) Patentinhaber: **HOECHST AKTIENGESELLSCHAFT, Postfach 80 03 20, D-6230 Frankfurt am Main 80 (DE)**

(72) Erfinder: **Meininger, Fritz, Dr., Loreleistrasse 7, D-6230 Frankfurt am Main 80 (DE)**
Erfinder: **Hoyer, Ernst, Dr., Eptingweg 3, D-6230 Frankfurt am Main 80 (DE)**
Erfinder: **Fass, Rudolf, Memelstrasse 28, D-6233 Kelkheim (Taunus) (DE)**

EP 0 084 849 B1

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

## Beschreibung

Die Erfindung liegt auf dem technischen Gebiet der faserreaktiven Kupferkomplex-Disazofarbstoffe.

Die Beispiele 82 und 83 der europäischen Patentanmeldungs-Veröffentlichung Nr. 0 040 806 und das Beispiel 5 der europäischen Patentanmeldungs-Veröffentlichung Nr. 0 040 790 offenbaren faserreaktive Kupferkomplex-Disazoverbindungen (Farbstoffe) mit einer β-Sulfatoethylsulfonyl-Gruppe und einer Sulfophenylamino-fluortriazinylamino-Gruppe. Diese Farbstoffe besitzen eine sehr unzureichende alkalische Druckpastenstabilität; bei Lagerung von deren alkalischen Druckpasten für einige Tage bei höherer Temperatur zeigen sich deutliche Farbstärkeverluste. Es wurde nun gefunden, dass man durch Austausch des Fluoratoms im Fluortriazin-Teil dieser bekannten Farbstoffe durch ein Chloratom neue Farbstoffe erhalten kann, die eine deutlich bessere und anwendungstechnisch vorteilhafte alkalische Druckpastenstabilität besitzen.

Die vorliegende Erfindung betrifft somit neue, wertvolle und vorteilhafte wasserlösliche Kupferkomplex-Disazoverbindungen, die die allgemeine Formel (1)

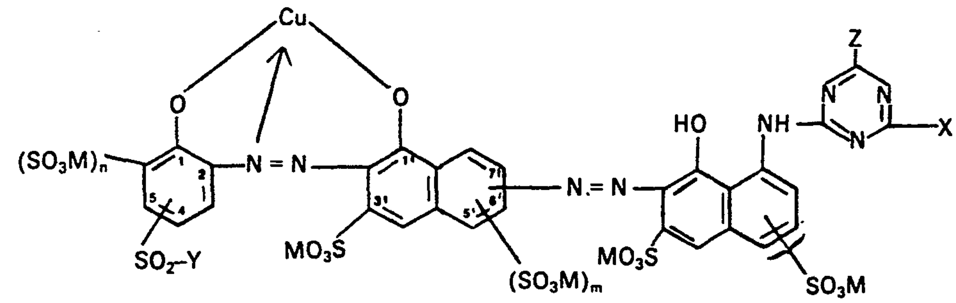

(1)

besitzen. In dieser bedeuten:

m ist die Zahl Null oder 1 (wobei im Falle m = 0 diese Gruppe Wasserstoff ist);

n ist die Zahl Null oder 1 (wobei im Falle n = 0 diese Gruppe Wasserstoff ist);

die Gruppe $-SO_2-Y$ steht in 5-Stellung an den Benzolkern gebunden, wenn n gleich 0 ist, oder steht in 4-Stellung an den Benzolkern gebunden, wenn n gleich Null oder 1 ist;

die freistehende Azogruppe kann an den mittelständigen Napththalinkern in 6'- oder 7'-Stellung gebunden sein; sofern m gleich 1 ist, ist diese Sulfongruppe in 5'-Stellung gebunden, wenn die Azogruppe in 6'-Stellung steht, und ist in 6'-Stellung gebunden, wenn die Azogruppe in 7'-Stellung steht;

X ist ein Chloratom oder eine Gruppe der Formel (2a), (2b) oder (2c)

$$-O-R^1 \quad -S-R^2 \quad -N\begin{matrix} R^3 \\ R^4 \end{matrix}$$

(2a) (2b) (2c)

in welchen

$R^1$ eine geradkettige oder verzweigte Alkylgruppe von 1 bis 4 C-Atomen bedeutet, die substituiert sein kann, oder einen gegebenenfalls substituierten Arylrest bedeutet, oder für ein Wasserstoffatom steht,

$R^2$ eine geradkettige oder verzweigte Alkylgruppe von 1 bis 4 C-Atomen bedeutet, die substituiert sein kann, oder für einen gegebenenfalls substituierten Arylrest steht,

$R^3$ ein Wasserstoffatom ist oder eine geradkettige oder verzweigte Alkylgruppe von 1 bis 4 C-Atomen bedeutet, die substituiert sein kann, bevorzugt durch eine Hydroxy-, Sulfato-, Sulfo- oder Carboxygruppe oder eine Alkoxygruppe von 1 bis 4 C-Atomen, und

$R^4$ ein Wasserstoffatom ist oder für eine Cycloalkylgruppe, wie Cyclopentyl- oder Cyclohexylgruppe, die durch 1 bis 3 Methylgruppen substituiert sein kann, steht oder eine geradkettige oder verzweigte Alkylgruppe von 1 bis 4 C-Atomen bedeutet, die substituiert sein kann, bevorzugt durch eine Hydroxy-, Sulfato-, Sulfo- oder Carboxygruppe oder eine Alkoxygruppe von 1 bis 4 C-Atomen, oder ein Arylrest ist, der substituiert sein kann, wobei die Substituenten bevorzugt 1, 2 oder 3 Substituinten sind, die aus der Menge: 3 Alkylgruppen von 1 bis 4 C-Atomen, 2 Alkoxygruppen von 1 bis 4 C-Atomen, 2 Chloratome, 3 Sulfogruppen, 1 Carboxygruppe und 1 Gruppe der nachstehend definierten Formel $-SO_2-Y$ ausgewählt sind,

wobei $R^3$ und $R^4$ zueinander gleich oder voneinander verschieden sein können, oder

$R^3$ und $R^4$ bilden als Alkylenreste von 1 bis 4 C-Atomen zusammen mit dem Stickstoffatom und gegebenenfalls einem Sauerstoff-, Schwefel- oder Stickstoffatom als weiterem Heteroatom einen heterocyclischen 6-gliedrigen Rest, wie beispielsweise den Morpholin-, den Thiomorpholin-, den Piperazin- oder den Piperidin-Rest;

Y ist die Vinylgruppe oder eine Gruppe der allgemeinen Formel (2d)

$$-CH_2-CH_2-R \qquad (2d),$$

in welcher

R einen alkalisch eliminierbaren, anorganischen oder organischen Rest bedeutet;

Z ist ein Chloratom;

M ist ein Wasserstoffatom oder das Äquivalent

eines Metalls, vorzugsweise eines ein- oder zweiwertigen Metalls, wie Alkali-oder Erdalkalimetalls, insbesondere des Natriums, Kaliums oder Calciums.

Alkylgruppen von 1 bis 4 C-Atomen sind bevorzugt die Methyl- und Äthylgruppe; Alkoxygruppen von 1 bis 4 C-Atomen sind bevorzugt die Methoxy- und Äthoxygruppen.

Substituierte Alkylgruppen sind beispielsweise Alkylgruppen von 1 bis 4 C-Atomen, die durch einen oder zwei Substituenten aus der Gruppe Acetylamino, Hydroxy, Sulfato, β-Sulfatoäthylsulfonyl, Vinylsulfonyl, β-Thiosulfatoäthylsulfonyl, Alkoxy von 1 bis 4 C-Atomen, Sulfo, Carboxy, Phenyl, Naphthyl, durch Sulfo, Carboxy, β-Sulfatoäthylsulfonyl, Vinylsulfonyl, β-Thiosulfatoäthylsulfonyl, Alkyl von 1 bis 4 C-Atomen, Alkoxy von 1 bis 4 C-Atomen, Chlor, Sulfamoyl und/oder Carbamoyl substituiertes Phenyl und durch Sulfo, Carboxy, β-Sulfatoäthylsulfonyl, Vinylsulfonyl, β-Thiosulfatoäthylsulfonyl, Alkoxy von 1 bis 4 C-Atomen, Alkyl von 1 bis 4 C-Atomen, Chlor, Sulfamoyl und/oder Carbamoyl substituiertes Naphthyl substituiert sind. Arylreste sind vorzugsweise die Phenyl- und Napththylreste; diese können beispielsweise durch Substituenten aus der Gruppe Carboxy, Sulfo, Alkyl von 1 bis 4 C-Atomen, Alkoxy von 1 bis 4 C-Atomen, Hydroxy, Chlor, β-Sulfatoäthylsulfonyl, Vinylsulfonyl, β-Thiosulfatoäthylsulfonyl, Alkanoylamino von 1 bis 4 C-Atomen im Alkylrest und Carbalkoxy mit 1 bis 4 C-Atomen im Alkylrest substituiert sein.

Die alkalisch eliminierbare Gruppe R ist vorzugsweise ein Chloratom, die Acetoxygruppe, die Phosphatogruppe (entsprechend der allgemeinen Formel $-OPO_3M_2$ mit M der obengenannten Bedeutung), die Thiosulfatogruppe (entsprechend der allgemeinen Formel $-S-SO_3M$ mit M der obengenannten Bedeutung) und vorzugsweise die Sulfatogruppe (entsprechend der allgemeinen Formel $-OSO_3M$ mit M der obengenannten Bedeutung).

Die erfindungsgemässen Kupferkomplex-Disazoverbindungen können in Form ihrer freien Säure und bevorzugt in Form ihrer Salze, insbesondere neutralen Salze, vorliegen; als Salze sind insbesondere die Alkalimetall- und Erdalkalimetallsalze zu nennen, so beispielsweise die Natrium-, Kalium-und Calciumsalze. Die neuen Verbindungen finden bevorzugt in Form dieser Salze ihre Verwendung zum Färben (im allgemeinen Sinne und einschliesslich des Bedruckens verstanden) von hydroxy- und/oder carbonamidgruppenhaltigem Material.

Bevorzugte Reste $R^1$ und $R^2$ sind beispielsweise die Methyl-, Äthyl-, Propyl-, Isopropyl-, β-Hydroxyäthyl-, β-Methoxyäthyl- und β-Äthoxyäthyl-Gruppe, der Phenyl-, 4-Chlorphenyl-, 4-Methoxyphenyl- und 4-Sulfophenyl-Rest.

Die Aminogruppe der allgemeinen Formel (2c) ist beispielsweise die Amino-, Methylamino-, Äthylamino-, Propylamino-, Isopropylamino-, Butylamino-, β-Methoxyäthylamino-, Dimethylamino-, Diäthylamino-, N-β-Sulfoäthyl-N-methyl-amino-, β-Hydroxyäthylamino-, β-Sulfatoäthylamino-, Cyclohexylamino-, Morpholino-, Piperidino- und die Piperazino-Gruppe, vor allem jedoch Aminogruppen mit einem gegebenenfalls substituierten Arylrest, wie beispielsweise die Phenylamino-, N-Methyl-N-phenyl-amino-, Toluidino-, Xylidino-, Chloranilino-, Anisidino-, Phenetidino-, Sulfoanilino-, 3-(β-Sulfatoäthylsulfonyl)-anilino-, 4-(β-Sulfatoäthylsulfonyl)-anilino-, Disulfo-anilino-, Sulfo-methyl-anilino-, N-Sulfomethyl-anilino-, N-Methyl-sulfoanilino-,Carboxyphenylamino-, 2-Carboxy-5-sulfophenylamino-, 2-Carboxy -4- sulfo-phenylamino- und die Sulfonaphthylaminogruppen, wie die 4-Sulfonapththyl -(1)- amino-, 3,6-Disulfonaphthyl -(1)- amino- und 3,6,8-Trisulfonaphthyl -(1)- amino-Gruppe.

Die vorliegende Erfindung betrifft weiterhin Verfahren zur Herstellung dieser erfindungsgemässen Kupferkomplex-Disazoverbindungen. Diese sind dadurch gekennzeichnet, dass man

a) eine Kupferkomplex-Monoazoverbindung der allgemeinen Formel (3)

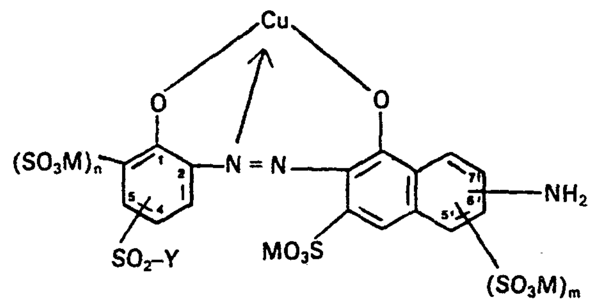

(3)

(in welcher m, n, Y und M die obengenannten Bedeutungen haben und die freistehende Aminogruppe in 6'- oder 7'-Stellung an den Naphthalinkern gebunden ist, wobei im Falle, dass m gleich 1 ist, diese Sulfogruppe in 5'-Stellung an den Naphthalinkern gebunden ist, wenn die Aminogruppe in 6'-Stellung steht, und die Sulfogruppe in 6'-Stellung an den Naphthalinkern gebunden ist, wenn die Aminogruppe in 7'-Stellung steht) diazotiert und mit einer Verbindung der allgemeinen Formel (4)

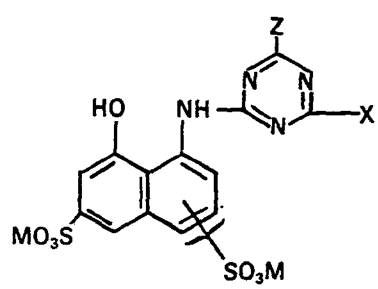

(4)

(in welcher M, X und Z die obengenannten Bedeutungen besitzen) kuppelt oder dass man

b) eine o,o'-Dihydroxy-Azoverbindung der allgemeinen Formel (5)

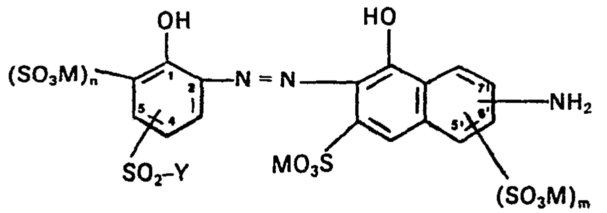

(5)

(in welcher M, Y, m und n die für die Formel (1) bzw. Formel (3) angegebenen Bedeutungen haben) diazotiert und mit einer Verbindung der obengenannten und definierten allgemeinen Formel (4) kuppelt und diese metallfreie Disazoverbindung sodann mit einem kupferabgebenden Mittel behandelt oder dass man

c) eine Disazoverbindung der allgemeinen Formel (6)

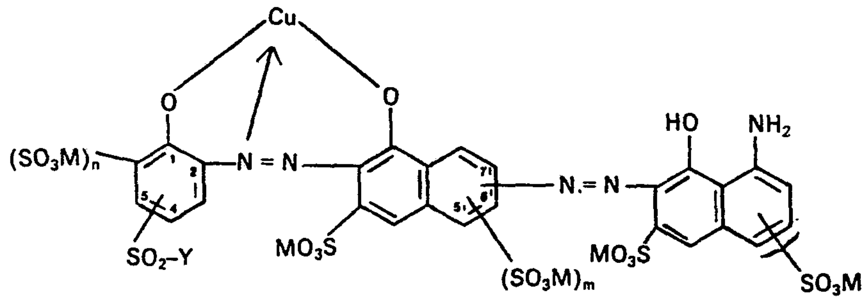

(6)

(in welcher M, Y, m und n die obengenannten Bedeutungen haben) mit einer Dihalogeno-s-triazin-Verbindung der allgemeinen Formel (7)

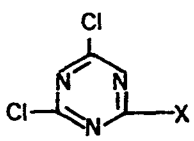

(7)

(in welcher X eine Gruppe der obengenannten und definierten Formel (2a), (2b) oder (2c) ist) oder mit Cyanurchlorid umsetzt oder dass man

d) eine metallfreie Disazoverbindung der allgemeinen Formel (8)

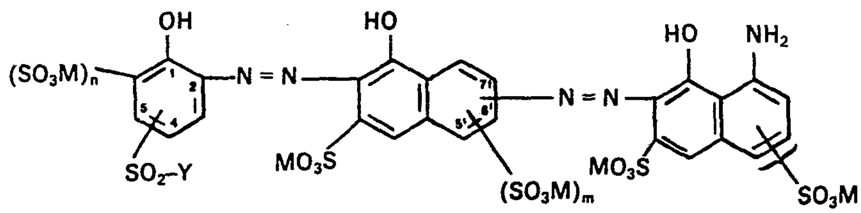

(8)

(in welcher M, Y, m und n die obengenannten Bedeutungen haben) mit einer Dihalogeno-s-triazinverbindung der oben genannten und definierten allgemeinen Formel (7) oder mit Cyanurchlorid umsetzt und sodann mit einem kupferabgebenden Mittel behandelt oder dass man

e) eine Azoverbindung der allgemeinen Formel (9)

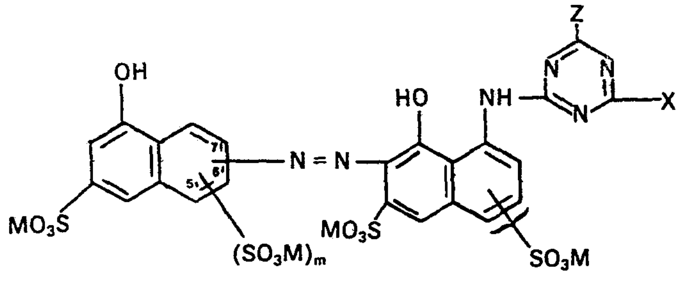

(9)

(in welcher M, m, X und Z die obengenannten Bedeutungen haben) mit der Diazoniumverbindung eines Aminophenols der allgemeinen Formel (10)

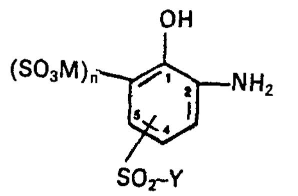

(10)

(in welcher Y und n die oben genannten Bedeutungen haben und die Gruppe $-SO_2-Y$ sich in 4- oder 5-Stellung befindet, falls n gleich null ist, und sich in 4-Stellung befindet, falls n gleich 1 ist) kuppelt und die Disazoverbindung mit einem kupferabgebenden Mittel behandelt, oder dass man

f) eine Kupferkomplex-Disazoverbindung der allgemeinen Formel (11)

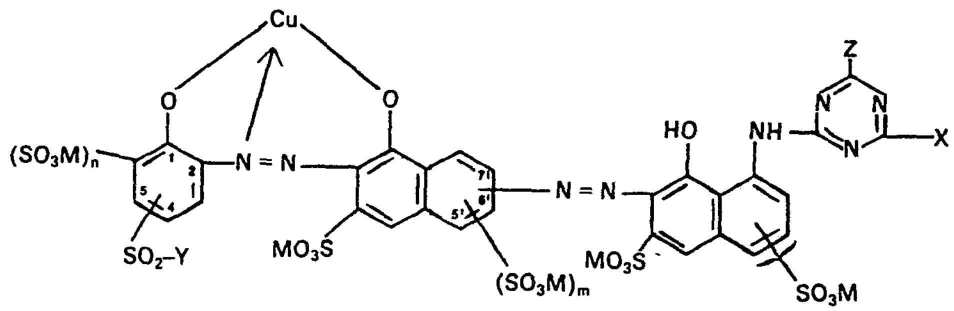

(11)

(in welcher M, m, n, Y und Z die obengenannten Bedeutungen haben und X für ein Chloratom steht und diese Verbindung beispielsweise nach den oben beschriebenen erfindungsgemässen Varianten a) bis e) oder der nachstehend beschriebenen Variante g) hergestellt werden kann) mit einer Verbindung der allgemeinen Formel (12)

H–X (12)

(in welcher X eine Gruppe der obigen Formel (2a), (2b) oder (2c) ist) umsetzt oder dass man

g) eine metallfreie o,o'-Dihydroxy-Disazoverbindung der allgemeinen Formel (13)

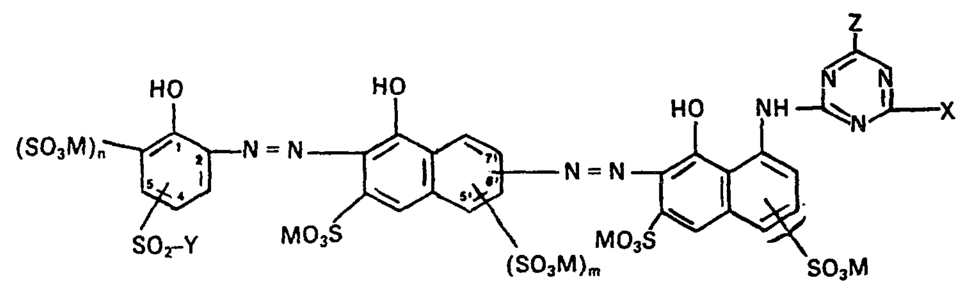

(13)

(in welcher M, m, n, Y, X und Z die obengenannten Bedeutungen haben) mit einem kupferabgebenden Mittel behandelt.

Die erfindungsgemässen Umsetzungen können bezüglich ihrer Verfahrensbedingungen analog bekannten Verfahrensweisen durchgeführt werden. Solche Verfahrensweisen der Diazotierung und Kupplung und der Umsetzung von Aminoverbindungen mit Halogentriazinverbindungen sind allgemein bekannt; für die letztbenannte Kondensationsreaktion sei beispielsweise insbesondere auf die Europäischen Offenlegungsschriften Nrs. 00 32 187 und 00 36 133 aufmerksam gemacht. Ebenso erfolgt die Kupferkomplexbildung der metallfreien o,o'-Dihydroxy-Azoverbindungen durch Umsetzung mit einem kupferabgebenden Mittel nach an und für sich bekannten Verfahrensweisen; diese sind beispielsweise in den deutschen Auslegeschriften Nrs. 15 44 541 und 16 44 155 beschrieben.

Kupferabgebende Mittel sind beispielsweise die Salze des zweiwertigen Kupfers, wie Kupfersulfat, Kupferchlorid, Kupferacetat und Kupfercarbonat.

Die Ausgangsverbindungen der allgemeinen Formel (4) können beispielsweise analog den Verfahrensweisen der deutschen Patentschrift 485 185 oder der oben beschriebenen Europäischen Offenlegungsschriften hergestellt werden. Die Ausgangsverbindungen der allgemeinen Formel (6) lassen sich beispielsweise gemäss den Verfahrensweisen der deutschen Offenlegungsschrift 1 544 541 synthetisieren. Die metallfreien Disazoverbindungen der allgemeinen Formel (13) können aus den metallfreien Disazoverbindungen der allgemeinen Formel (8) durch Umsetzung mit einer Dihalogeno-triazin-Verbindung der oben genannten allgemeinen Formel (7) oder durch Umsetzung einer metallfreien Disazoverbindung der obigen allgemeinen Formel (8) mit Cyanurchlorid oder Cyanurbromid und anschliessender zweiter Kondensationsreaktion mit einer Verbindung der obengenannten allgemeinen Formel (12) hergestellt werden, oder sie sind über

die erfindungsgemässe Verfahrensvariante b) erhältlich. Die als Ausgangsverbindung dienende Monoazoverbindung der allgemeinen Formel (9) kann beispielsweise durch Kupplung der Diazoniumverbindung der Aminonaphtholsulfonsäure der allgemeinen Formel (14)

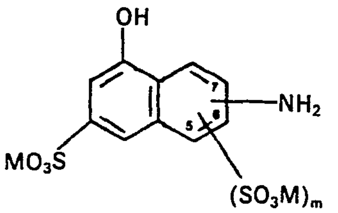
(14)

(in welcher M und m die obengenannten Bedeutungen haben und die Stellung der Sulfongruppe und Aminogruppe wie in Formel (5) definiert ist) mit einer Verbindung der oben genannten und definierten allgemeinen Formel (4) hergestellt werden.

Aminophenole der allgemeinen Formel (10), die als Ausgangsverbindungen zur Herstellung der erfindungsgemässen Kupferkomplex-Disazoverbindungen dienen können, sind beispielsweise 4-(β-Sulfatoäthylsulfonyl) -2- amino-phenol, 4-(β-Thiosulfatoäthylsulfonyl) -2- amino-phenol, 4-Vinylsulfonyl -2- amino-phenol, 4-(β-Chloräthylsulfonyl) -2- amino-phenol, 4-(β-Phosphatoäthylsulfonyl) -2- amino-phenol, 5-(β-Sulfatoäthylsulfonyl) -2- amino-phenol, 5-Vinylsulfonyl -2- amino-phenol, 5-(β-Thiosulfatoäthylsulfonyl) -2- amino-phenol, 5-(β-Chloräthylsulfonyl) -2- amino-phenol, 5-(β-Phosphatoäthylsulfonyl) -2- amino-phenol, 4-(β-Sulfatoäthylsulfonyl) -2- amino-phenol -6- sulfonsäure, 4-(β-Thiosulfatoäthylsulfonyl) -2- amino-phenol -6- sulfonsäure und 4-Vinylsulfonyl -2-amino-phenol -6- sulfonsäure.

Aminonaphtholsulfonsäure-Verbindungen der allgemeinen Formel (14), die als Ausgangsverbindungen zur Herstellung der erfindungsgemässen Verbindungen dienen können, sind 6-Amino-1-naphthol -3- sulfonsäure, 7-Amino-1-naphthol -3- sulfonsäure, 6-Amino-1-naphthol -2,5-disulfonsäure und 7-Amino-1-naphthol -3,6- disulfonsäure.

Kupplungskomponenten der allgemeinen Formel (4), die als Ausgangsverbindungen zur Synthese der erfindungsgemässen Kupferkomplex-Disazoverbindungen dienen können, sind die N-Acylamino-Verbindungen aus 1-Amino-8-naphthol-3,6- oder -4,6-disulfonsäure mit Cyanurchlorid oder mit den Dihalogeno-s-triazin-Verbindungen entsprechend der allgemeinen Formel (7), wie beispielsweise 2,4-Dichlor-6- (4'-sulfoanilino) -1,3,5-triazin, 2,4-Dichlor-6- (3'-sulfoanilino) 1-3,5- triazin, 2,4-Dichlor-6-amino-1,3,5- triazin, 2,4-Dichlor -6- methylamino-1,3,5-triazin, 2,4-Dichlor -6- äthylamino-1,3,5-triazin, 2,4-Dichlor -6- propylamino-1,3,5-triazin, 2,4-Dichlor -6- isopropylamino-1,3,5-triazin, 2,4-Dichlor -6- n-butylamino-1,3,5-triazin, 2,4-Dichlor -6- β-methoxyäthylamino-1,3,5-triazin, 2,4-Dichlor -6- dimethylamino-1,3,5-triazin, 2,4-Dichlor -6- diäthylamino-1,3,5-triazin, 2,4-Dichlor -6- (N-β-sulfoäthyl-N-methyl-amino) -1,3,5-triazin, 2,4-Dichlor -6- β-hydroxyäthylamino-1,3,5-triazin, 2,4-Dichlor -6- β-sulfatoäthylamino-1,3,5-triazin, 2,4-Dichlor-6- cyclohexylamino-1,3,5-triazin, 2,4-Dichlor-6- morpholino-1,3,5-triazin, 2,4-Dichlor -6- piperidino-1,3,5-triazin, 2,4-Dichlor -6- piperazino-1,3,5-triazin, 2,4-Dichlor -6- (N,N-di-β-hydroxyäthyl) -amino-1,3,5-triazin, 2,4-Dichlor -6-phenylamino-1,3,5-triazin, 2,4-Dichlor -6- (N-methyl- N-phenyl-amino) -1,3,5-triazin, 2,4-Dichlor-6- p-toluidino-1,3,5-triazin, 2,4-Dichlor-6- o-toluidino- oder -m-toluidino-1,3,5-triazin, 2,4-Dichlor -6- xylidino-1,3,5-triazin, 2,4-Dichlor -6- p-chloranilino-1,3,5-triazin, 2,4-Dichlor-6-o-chloranilino- oder -m-chloranilino-1,3,5-triazin, 2,4-Dichlor -6- o-anisidino- oder -m-anisidino-1,3,5-triazin, 2,4-Dichlor -6- o-phenitidino- oder -m-phenetidino-1,3,5-triazin, 2,4-Dichlor -6- o-carboxy-anilino- oder -m-carboxyanilino-1,3,5-triazin, 2,4-Dichlor -6- o-methoxy- oder -m-methoxyphenoxy-1,3,5-triazin, 2,4-Dichlor -6- p-anisidino-1,3,5-triazin, 2,4-Dichlor -6- p-phenetidino-1,3,5,-triazin, 2,4-Dichlor-6-m- oder -p-(β-sulfatoäthylsulfonyl) -anilino-1,3,5-triazin, 2,4-Dichlor-6-(2',4'-oder -2',5'-disulfoanilino) -1,3,5-triazin, 2,4-Dichlor -6- N-sulfomethylanilino-1,3,5-triazin, 2,4-Dichlor -6- (4'-methyl-2'-sulfoanilino) -1,3,5-triazin, 2,4-Dichlor -6- p-carboxy-anilino-1,3,5-triazin, 2,4-Dichlor -6- (2'-carboxy-4'-oder5'-sulfo)-anilino-1,3,5-triazin, 2,4-Dichlor-6-(4'-sulfonaphthyl-1'-amino) -1,3,5-triazin, 2,4-Dichlor-6-(3',6'-disulfonaphthyl-1'-amino)-1,3,5-triazin, 2,4-Dichlor -6- (3',6',8'-trisulfonaphthyl-1'-amino) -1,3,5-triazin, 2,4-Dichlor -6- methoxy-1,3,5-triazin, 2,4-Dichlor -6- äthoxy-1,3,5-triazin, 2,4-Dichlor -6- propoxy-1,3,5-triazin, 2,4-Dichlor -6- isopropoxy-1,3,5-triazin, 2,4-Dichlor -6- (β-methoxy-äthoxy) -1,3,5-triazin, 2,4-Dichlor -6- (β-äthoxy-äthoxy)-1,3,5-triazin, 2,4-Dichlor -6- phenoxy-1,3,5-triazin, 2,4-Dichlor-6-m- oder -p-chlorphenoxy-1,3,5-triazin, 2,4-Dichlor -6- p-methoxy-phenoxy-1,3,5-triazin, 2,4-Dichlor-6-m- oder p-sulfophenoxy-1,3,5-triazin, 2,4-Dichlor-6- methylmercapto-1,3,5-triazin, 2,4-Dichlor-6- β-hydroxyäthylmercapto-1,3,5-triazin, 2,4-Dichlor -6-phenylmercapto-1,3,5-triazin.

Von den erfindungsgemässen Kupferkomplex-Disazoverbindungen entsprechend der allgemeinen Formel (1) sind diejenigen bevorzugt, in denen Y die β-Thiosulfatoäthyl- und insbesondere die Vinylsulfonyl- oder β-Sulfatoäthylsulfonyl-Gruppe bedeutet, weiterhin diejenigen, in denen n für die Zahl 1 steht, ebenso diejenigen, in denen in der endständigen Triazinylamino-naphtholsulfonsäure-Komponente die eine Sulfogruppe meta-ständig zur acylierten Aminogruppe gebunden ist. Weiterhin sind diejenigen bevorzugt, in denen X eine Gruppe der allgemeinen Formel (2c) ist, in welcher $R^3$ für ein Wasserstoffatom oder eine Alkylgruppe von 1 bis 4 C-Atomen steht, die durch

eine Hydroxy- oder Sulfogruppe substituiert sein kann, und in welcher $R^4$, zu $R^3$ gleich oder von $R^3$ verschieden, ein Wasserstoffatom oder eine Alkylgruppe von 1 bis 4 C-Atomen bedeutet, die durch eine Hydroxy-, Sulfo-, Sulfato-, Methoxy- oder Äthoxygruppe substituiert sein kann, oder den Phenylrest bedeutet, der durch einen oder zwei Substituenten aus der Gruppe Sulfo, Methyl, Äthyl, Methoxy, Äthoxy, Chlor und Carboxy substituiert sein kann oder durch eine β-Sulfatoäthylsulfonyl-Gruppe substituiert sein kann, oder den Naphthylrest bedeutet, der durch eine, zwei oder drei Sulfogruppen substituiert sein kann, wie beispielsweise die Toluidino-, Xylidino-, Chlorphenylamino-, Methoxy- und Dimethoxy-phenylamino-, die Äthoxyphenylamino-, Sulfophenylamino-, 3-(β-Sulfatoäthylsulfonyl)-phenylamino-, 4-(β-Sulfatoäthylsulfonyl)-phenylamino-, die Disulfophenylamino-, die Carboxyphenylamino-, die 2-Carboxy-5-phenylamino-, 2-Carboxy-4-sulfophenylamino-, 4-Sulfonapththyl-(1)-amino-, 3,6-Disulfonaphthyl-(1)-amino- und 3,6,8-Trisulfonaphthyl-(1)-amino-Gruppen, sowie der Morpholinorest.

Hervorzuheben von den erfindungsgemässen Kupferkomplexdisazoverbindungen sind weiterhin die Verbindungen entsprechend den allgemeinen Formeln (15), (16), (17) und (18)

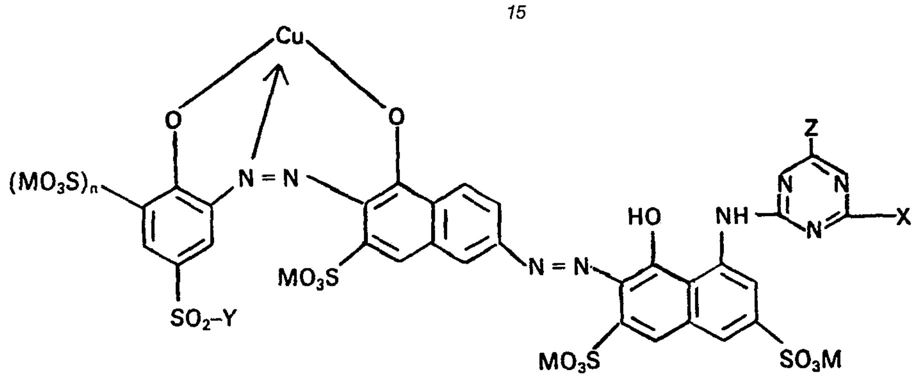

(15)

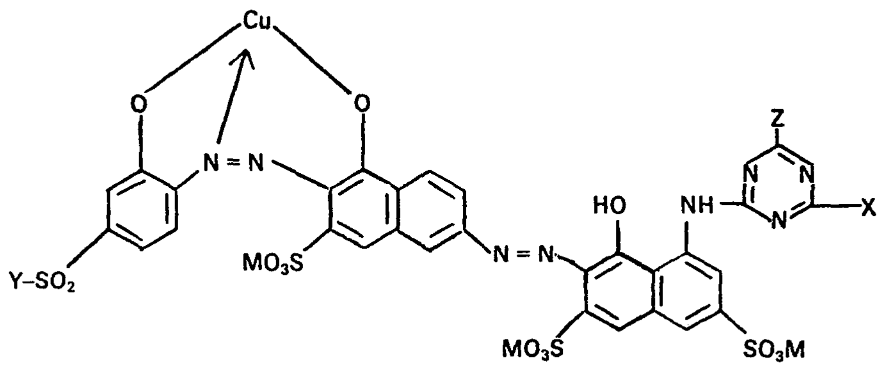

(16)

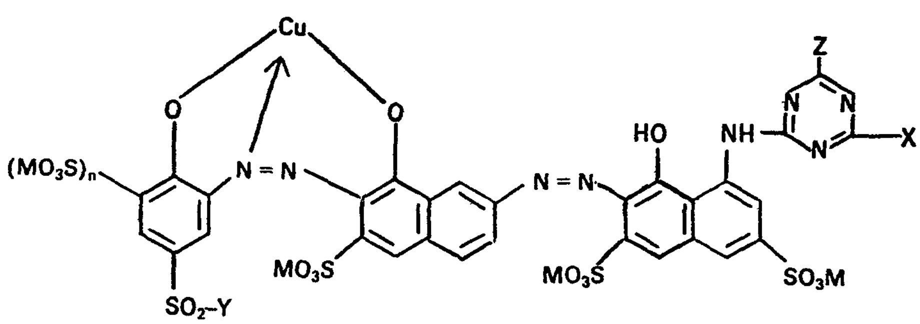

(17)

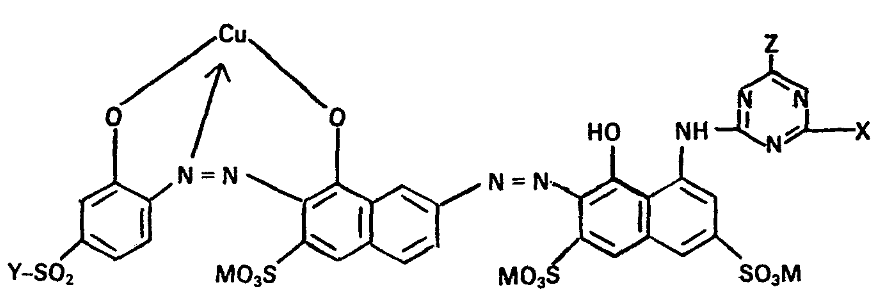

(18)

In diesen Formeln haben die Formelglieder M, Y, n, Z und X die obengenannten, insbesondere bevorzugten, Bedeutungen.

Als Einzelverbindungen können insbesondere die in den Beispielen 14 und 23 beschriebenen erfindungsgemässen Kupferkomplex-Disazoverbindungen hervorgehoben werden.

Die Abscheidung und Isolierung der erfindungsgemäss hervorgestellten Verbindungen der allgemeinen Formel (1) aus den Syntheselösungen kann nach allgemein bekannten Methoden erfolgen, so beispielsweise durch Ausfällen aus dem Reaktionsmedium mittels Elektrolyten, wie beispielsweise Natriumchlorid oder Kaliumchlorid, oder durch Eindampfen der Reaktionslösung, beispielsweise durch Sprühtrocknung, wobei dieser Reaktionslösung eine Puffersubstanz, wie beispielsweise ein Gemisch aus Mono- und Dinatriumphosphat, zugefügt werden kann. Gegebenenfalls können diese Syntheselösungen auch, gegebenenfalls nach Zusatz einer Puffersubstanz und nach eventuellem Konzentrieren, direkt als Flüssigpräparation der färberischen Verwendung zugeführt werden.

Die erfindungsgemässen Kupferkomplex-Disazoverbindungen besitzen wertvolle Farbstoffeigenschaften, die in Folge ihrer Reste des Vinylsulfontyps und des Halogenotriazinyl-Restes faserreaktive Eigenschaften aufweisen. Die neuen Verbindungen werden bevorzugt zum Färben (im allgemeinen Sinne, einschliesslich des Bedrukkens) von hydroxy- und/oder carbonamidgruppenhaltigen Materialien, beispielsweise in Form von Flächengebilden, wie Papier und Leder oder von Folien aus Polyamid, oder in der Masse, wie beispielsweise von Polyamid und Polyurethan, insbesondere aber von diesen Materialien in Faserform verwendet. Die vorliegende Erfindung betrifft somit auch die Verwendung der Verbindungen der allgemeinen Formel (1) zum Färben (im obigen Sinne) dieser Materialien bzw. Verfahren zum Färben solcher Materialien in an und für sich üblichen Verfahrensweisen, bei welchen eine Verbindung der allgemeinen Formel (1) als Farbmittel eingesetzt wird. Bevorzugt kommen die Materialien in Form von Fasermaterialien zur Anwendung, insbesondere in Form von Textilfasern, wie Garnen, Wickelkörpern, Geweben und Gewirken.

Hydroxygruppenhaltige Materialien sind natürliche, regenerierte oder synthetische hydroxygruppenhaltige Materialien, wie beispielsweise Cellulosefasermaterialien oder Celluloseregeneratmaterialien und Polyvinylalkohole. Cellulosefasermaterialien sind vorzugsweise Baumwolle, aber auch andere Pflanzenfasern, wie Leinen, Hanf, Jute und Ramiefasern; regenerierte Cellulosefasern sind beispielsweise Zellwolle und Viskosekunstseide.

Carbonamidgruppenhaltige Materialien sind beispielsweise synthetische Polyamide, wie Polyamid-6,6, Polyamid-6, Polyamid-11 und Polyamid-4, und Polyurethane, insbesondere in Form der Fasern, oder natürliche Polyamide, beispielsweise Wolle und andere Tierhaare, Seide und Leder.

Die erfindungsgemässen Kupferkomplex-Disazofarbstoffe lassen sich auf den genannten Substraten, insbesondere auf den genannten Fasermaterialien, nach den für wasserlösliche Farbstoffe, insbesondere für faserreaktive Farbstoffe, bekannten Anwendungstechniken applizieren und fixieren.

So erhält man mit ihnen auf Cellulosefasern nach dem Ausziehverfahren unter Verwendung von verschiedensten säurebindenden Mitteln und gegebenenfalls unter Zugabe von neutralen Salzen, wie Natriumchlorid oder Natriumsulfat, sehr gute Farbausbeuten sowie einen ausgezeichneten Farbaufbau. Man färbt bei Temperaturen zwischen 40 und 105 °C, gegebenenfalls bei Temperaturen bis zu 120 °C unter Druck, gegebenenfalls in Gegenwart von üblichen Färbereihilfsmitteln, im wässrigen Bad. Man kann dabei so vorgehen, dass man das Material in das warme Bad einbringt und dieses allmählich auf die gewünschte Färbetemperatur erwärmt und den Färbeprozess bei dieser Temperatur zu Ende führt. Die das Ausziehen des Farbstoffes beschleunigenden Neutralsalze können dem Bade gewünschtenfalls auch erst nach Erreichen der eigentlichen Färbetemperatur zugesetzt werden.

Nach dem Klotzverfahren werden auf Cellulosefasern ebenfalls ausgezeichnete Farbausbeuten erhalten, wobei durch Verweilen bei Raumtemperatur oder erhöhter Temperatur, beispielsweise bis zu 60 °C, durch Dämpfen oder durch Trockenhitze in üblicher Weise fixiert werden kann.

Ebenfalls nach den üblichen Druckverfahren für Cellulosefasern, die einphasig – beispielsweise durch Bedrucken mit einer Natriumcarbonat oder ein anderes säurebindendes Mittel enthaltenden Druckpaste und anschliessendes Dämpfen bei 100–103 °C, – oder zweiphasig – beispielsweise durch Bedrucken mit neutraler oder schwach saurer Druckfarbe, anschliessender Fixierung entweder durch Hindurchführen durch ein heisses elektrolythaltiges alkalisches Bad oder durch Überklotzen mit einer alkalischen elektrolythaltigen Klotzflotte und anschliessendem Verweilen oder Dämpfen oder Behandlung mit Trockenhitze des behandelten Materials, – durchgeführt werden können, erhält man farbstarke Drucke mit gutem Stand der Konturen und einem klaren Weissfond. Der Ausfall der Drucke ist von wechselnden Fixierbedingungen nur wenig abhängig. Sowohl in der Färberei als auch in der Druckerei sind die mit den erfindungsgemässen Verbindungen erhaltenen Fixiergrade sehr hoch.

Neben dem üblichen Wasserdampf von 100–103 °C kann auch überhitzter Dampf und Druckdampf von Temperaturen bis zu 160 °C eingesetzt werden. Bei der Fixierung mittels Trokkenhitze nach den üblichen Thermofixierverfahren verwendet man Heissluft von 120–200 °C.

Die säurebindenden und die Fixierung der erfindungsgemässen Verbindungen auf den Cellulosefasern bewirkenden Mittel sind beispielsweise wasserlösliche basische Salze der Alkalimetalle und ebenfalls Erdalkalimetalle von anorganischen und organischen Säuren oder Verbindungen, die in der Hitze Alkali freisetzen. Insbesondere sind die Alkalimetallhydroxide und Alkalimetallsalze von schwachen bis mittelstarken anorganischen oder organischen Säuren zu nennen, wobei von den Alkaliverbindungen vorzugsweise die Natrium- und Kaliumverbindungen gemeint sind. Solche säurebindenden Mittel sind beispielsweise Natriumhydroxyd, Kaliumhydroxyd, Natriumcarbonat, Natriumbicarbonat, Kaliumcarbonat, Natriumformiat, Natriumdihydrogenphosphat, Dinatriumhydrogenphosphat, Natriumtrichloracetat, Wasserglas und Trinatriumphosphat.

Durch die Behandlung der erfindungsgemässen Verbindungen mit den säurebindenden Mitteln, gegebenenfalls unter Wärmeeinwirkung, werden diese chemisch an die Cellulosefaser gebunden. Insbesondere die Cellulosefärbungen zeigen nach der üblichen Nachbehandlung durch Spülen zur Entfernung von nicht fixierten Anteilen ausgezeichnete Nassechtheiten.

Für das coloristische Verhalten der erfindungsgemässen Verbindungen ist besonders hervorzuheben, dass sie sich durch gute Stabilität in Druckpasten und Klotzflotten, auch in Anwesenheit von Alkali, durch ein sehr gutes Ziehvermögen aus langer Flotte, durch guten Farbaufbau nach üblichen Färbe- und Druckverfahren, durch eine gleiche Farbtiefe beim Färben von Baumwolle und Regeneratcellulosefasern, durch egales Warenbild der mit ihnen hergestellten Färbungen und Drucke und ebenfalls durch einen gleichmässigen Ausfall der Färbungen aus langer Flotte bei Zugabe verschiedener Menge an Elektrolyten auszeichnen. Nicht fixierte Farbstoffanteile lassen sich leicht auswaschen.

Die Färbungen auf Polyurethanfasern und Polyamidfasern werden üblicherweise aus saurem Milieu ausgeführt. So kann man beispielsweise dem Färbebad Essigsäure und/oder Ammoniumsulfat oder Essigsäure und Ammoniumacetat oder Natriumacetat zufügen, um den gewünschten pH-Wert zu erzielen. Zwecks Erreichung einer guten Egalität der Färbung empfiehlt sich ein Zusatz an üblichen Egalisierhilfsmitteln, wie beispielsweise auf Basis eines Umsetzungsproduktes von Cyanurchlorid mit der dreifach molaren Menge einer Aminobenzolsulfonsäure und/oder einer Aminonaphthalinsulfonsäure oder auf Basis eines Umsetzungsproduktes von beispielsweise Stearylamin mit Äthylenoxyd. In der Regel wird das zu färbende Material bei einer Temperatur von etwa 40 °C in das zuerst schwach alkalisch eingestellte Bad eingebracht, einige Zeit darin bewegt, das Färbebad auf einen schwach sauren, vorzugsweise schwach essigsauren pH-Wert eingestellt und die eigentliche Färbung bei einer Temperatur zwischen 60 und 100 °C durchgeführt. Die Färbungen können aber auch bei Temperaturen bis 120 °C unter Druck ausgeführt werden.

Die erfindungsgemässen Kupferkomplex-Disazoverbindungen zeichnen sich durch einen hohen Fixiergrad bei dem Färben und Bedrucken von Fasermaterialien aus. Dies ist in der Praxis aus wirtschaftlichen, energetischen und ökologischen Gründen von grossem Nutzen, da die bessere Ausnutzung des angebotenen Farbstoffes gleichbedeutend ist mit einer energiesparenden, leichteren Auswaschbarkeit des verringerten, nicht fixierten Farbstoffanteiles und geringerer Abwasserbelastung.

Die mit den Kupferkomplex-Disazoverbindungen der Formel (1) hergestellten Färbungen und Drucke zeichnen sich durch klare Nuancen aus. Insbesondere die Färbungen und Drucke auf Cellulosefasermaterialien besitzen, wie bereits erwähnt, eine hohe Farbstärke, darüber hinaus eine gute bis sehr gute Lichtechtheit und sehr gute Nassechtheitseigenschaften, wie Wasch-, Walk-, Wasser-, Seewasser- und Schweissechtheiten, desweiteren eine gute Plissierechtheit, Bügelechtheit und Reibechtheit.

Die nachstehenden Beispiele dienen zur Erläuterung der Erfindung. Die darin genannten Teile sind Gewichtsteile, die Prozentangaben stellen Gewichtsprozente dar, sofern nichts anderes vermerkt. Gewichtsteile beziehen sich zu Volumenteilen wie Kilogramm zu Liter.

Die in den nachstehenden Beispielen formelmässig beschriebenen Verbindungen sind in Form der freien Säuren angegeben; im allgemeinen werden sie in Form ihrer Natrium- oder Kaliumsalze hergestellt und isoliert und in Form ihrer Salze zum Färben verwendet. Ebenso können die in den nachfolgenden Beispielen, insbesondere Tabellenbeispielen, in Form der freien Säure genannten Ausgangsverbindungen und Komponenten als solche oder in Form ihrer Salze, vorzugsweise Alkalimetallsalze, wie Natrium- oder Kaliumsalze, in die Synthese eingesetzt werden.

Beispiel 1

a) 14,9 Teile 4-β-Sulfatoäthylsulfonyl -2- amino-phenol werden in einem Gemisch aus 50 Teilen Wasser und 25 Teilen Eis suspendiert und durch Zugabe von 3,3 Teilen Natriumcarbonat gelöst; 10,3 Volumenteile einer wässrigen 5n-Natriumnitritlösung werden zugegeben, und das Ganze wird auf ein Gemisch von 13 Volumenteilen einer 31%igen wässrigen Salzsäure und 100 Teilen Eis unter Rühren laufen lassen, wobei die Temperatur bei 0 bis 5 °C gehalten wird. Es wird 30 Minuten bei dieser Temperatur weitergerührt; danach wird der pH mit Natriumbicarbonat auf einen Wert von 5,8 bis 6,2 gestellt. 16 Teile 6-Amino-1-naphthol-3,5-disulfonsäure werden unter Rühren eingetragen, der pH wird auf einen Wert von 6,8 eingestellt und die Kupplungsreaktion bei einer Temperatur zwischen 5 und 10 °C und unter Konstanthaltung des angegebenen pH-Wertes unter Rühren während einiger Stunden weiter und zu Ende geführt. Sodann werden 11,5 Volumenteile einer wässrigen 5n-Natriumnitritlösung hinzugegeben und das Gemisch wird in ein Gemisch aus 15 Volumenteilen einer 31%igen wässrigen Salzsäure und 300 Teilen Eis eingerührt. Man rührt noch 60 Minuten bei 0 bis 5 °C weiter, zerstört, wie üblich, einen Überschuss an salpetriger Säure mit Amidosulfonsäure und stellt mit Natriumbicarbonat einen pH-Wert von 6 ein.

b) Getrennt hiervon wird folgende Reaktionslösung hergestellt: 16 Teile 1-Amino-8-naphthol-3,6-disulfonsäure werden unter Rühren in 150 Teilen Wasser von etwa 10 °C suspendiert. 9,7 Teile 2,4,6-Trichlor-s-triazin werden bei einer Temperatur zwischen 0 und 10 °C eingerührt, und der Ansatz zwei Stunden bei einem pH-Wert zwischen 2 bis 2,5 (der durch Natriumbicarbonat gehalten wird) weitergerührt, anschliessend geklärt und in eine Lösung von 8,65 Teilen Anilin-3-sulfonsäure in 75 Teilen Wasser und 25 Volumenteilen einer wässrigen 2n-Natronlauge eingegossen. Man rührt diesen Ansatz bei einer Temperatur zwischen 35 und 40 °C sechs Stunden bei einen pH-Wert zwischen 4 und 4,5 weiter.

c) Die unter a) hergestellten Diazoniumsalzlösung der Aminoazoverbindung und die unter b) hergestellte Lösung des zweifachen Kondensationsproduktes werden bei einer Temperatur von etwa 5 °C vereinigt und bei 8 bis 10 °C und einem pH-Wert von 5,5–6,5 mehrere Stunden bis zur Beendigung der Kupplungsrekation weitergerührt. Sodann gibt man 12,5 Teile kristallisiertes Kupfersulfat und 8,5 Teile kristallisiertes Natriumacetat hinzu, rührt bei 25–35 °C etwa zwei Stunden bei einem pH-Wert zwischen 4,5 und 5,0. Man klärt diese Lösung der Disazoverbindung mittels 5 Teilen Kieselgur und Filtration und fällt die erfingungsgemässe Disazoverbindung durch Zugabe von etwa 380 Teilen Kaliumchlorid aus. Nach Abfiltration, Trocknen und Vermahlen erhält man ein blauschwarzes Pulver, das das Alkalimetallsalz, vorwiegend Kaliumsalz, der Kupferkomplex-Disazoverbindung der Formel

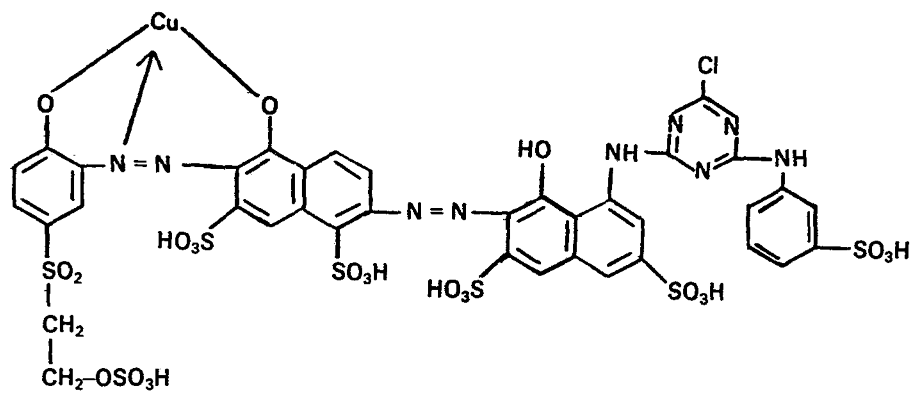

enthält. Diese zeigt sehr gute faserreaktive Farbstoffeigenschaften und färbt die in der Beschreibung genannten Materialien, wie beispielsweise Baumwolle, nach den in der Technik üblichen Anwendungsmethoden, insbesondere nach den für faserreaktive*) Applikations- und Fixierverfahren in der Färberei und im Druck, in farbstarken, dunkelblauen Nuancen mit sehr guten Echtheiten, von denen insbesonderedie Licht-, Wasch-, Wasser- und Schweissechtheiten sowie die Chlorbadewasserechtheit hervorgehoben werden können.

*) Farbstoffe üblichen

Beispiel 2

Man verfährt zur Herstellung einer erfindungsgemässen Kupferkomplex-Disazoverbindung gemäss der Verfahrensweise des Beispieles 1, ersetzt jedoch die im Beispiel 1b beschriebene Lösung durch die Lösung des primären Kondensationsproduktes von 2,4,6-Trichlor-s-triazin und 1-Amino-8-naphthol-3,6-disulfonsäure in äquivalenter Menge.

Man erhält das entsprechende Alkalimetallsalz der Verbindung der Formel

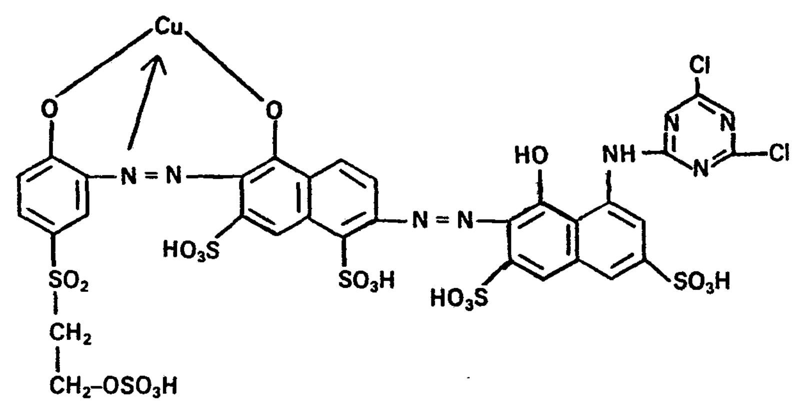

die ebenfalls sehr gute faserreaktive Farbstoffeigenschaften besitzt und nach den in der Technik für faserreaktive Farbstoffe üblichen Applikations- und Fixiermethoden beispielsweise auf

Baumwollmaterialien rotstichig marineblaue Färbungen und Drucke von sehr guten Gebrauchs- und Fabrikationsechtheiten, von denen insbesondere die Licht-, Wasser-, Wasch- und Schweissechtheiten hervorgehoben werden können, liefert.

Beispiele 3 bis 64

Die in den nachfolgenden Tabellenbeispielen durch ihre Ausgangskomponenten (einem Aminophenol entsprechend der allgemeinen Formel (10) als Diazokomponente, einer Aminonaphtholsulfonsäure entsprechend der allgemeinen Formel (14) als kupplungsfähige und diazotierbare Mittelkomponente und einer 1-(Halogentriazinylamino) -8- naphthol-3,6- oder -4,6-disulfonsäure entsprechend der allgemeinen Formel (4) als endständige Kupplungskomponente) charakterisierten erfindungsgemässen Kupferkomplex-Disazoverbindungen lassen sich ebenfalls in erfindungsgemässer Weise, beispielsweise gemäss der im Beispiel 1 angegebenen Verfahrensweise durch Umsetzung dieser Ausgangsverbindungen und anschliessende Kupferung mit einer kupferabgebenden Verbindung, herstellen. Diese erfindungsgemässen Kupferkomplex-Disazoverbindungen besitzen ebenfalls sehr gute faserreaktive Farbstoffeigenschaften und liefern Färbungen und Drucke auf den in der Beschreibung genannten Fasermaterialien, insbesondere auf Cellulosefasermaterialien nach den für faserreaktive Farbstoffe üblichen Applikations- und Fixiermethoden, mit sehr guten anwendungstechnischen Eigenschaften und Echtheiten in der in dem jeweiligen Tabellenbeispiel angegebenen Nuance auf beispielsweise Baumwolle.

Diese Ausgangsverbindungen sind in Form der freien Säure genannt; sie können als solche, ebenso auch in Form ihrer Salze, vorzugsweise Alkalimetallsalze, wie Natrium- oder Kaliumsalze, in die Synthese eingesetzt werden.

| Bsp. | Aminophenol entspr. Formel (10) | Aminonaphtholsulfonsäure entspr. Formel (14) | Halogentriazinylaminonaphthol entspr. Formel (4) | Nuance auf Baumwolle |
|---|---|---|---|---|
| 3 | 4-β-Sulfatoäthylsulfonyl-2- aminophenol | 6-Amino-1-naphthol-3-sulfonsäure | 1-(4′,6′-Dichlor-s-triazin-2′-yl) -amino-3,6-disulfo-8-naphthol | dunkelblau |
| 4 | 5-β-Sulfatoäthylsulfonyl-2-aminophenol | do. | do. | dunkelblau |
| 5 | 4-β-Sulfatoäthyl-sulfonyl-2-aminophenol-6-sulfonsäure | do. | do. | dunkelblau |
| 6 | 4-Vinylsulfonyl-2- amino-phenol | do. | do. | dunkelblau |
| 7 | 5-Vinylsulfonyl-2- amino-phenol | do. | do. | dunkelblau |
| 8 | 4-Vinylsulfonyl-2-amino-phenol- 6-sulfonsäure | do. | do. | dunkelblau |
| 9 | 4-β-Thiosulfatoäthylsulfonyl-2- amino-phenol | do. | do. | dunkelblau |
| 10 | 5-β-Thiosulfatoäthylsulfonyl-2- amino-phenol | do. | do. | dunkelblau |
| 11 | 4-β-Thiosulfatoäthylsulfonyl-2- amino-phenol-6-sulfonsäure | do. | do. | dunkelblau |
| 12 | 4-β-Sulfatoäthylsulfonyl-2- aminophenol | do. | 1-[4′-Chlor-6′-(3″-sulfophenylamino) -S-triazin-2′-yl]amino-3,6-disulfo-8-naphthol | dunkelblau |
| Bsp. | Aminophenol (10) | Aminonaphthol (14) | Triazinylaminonaphthol (4) | Nuance |
| 13 | 5-β-Sulfatoäthylsulfonyl-2- aminophenol | 6-Amino-1-naphthol-3-sulfonsäure | 1-[4′-Chlor-6′(3″-sulfophenylamino)-s-triazin-2′-yl]- amino-3,6-disulfo-8-naphthol | dunkelblau |
| 14 | 4-β-Sulfatoäthylsulfonyl-2-aminophenol-6-sulfonsäure | do. | do. | dunkelblau |
| 15 | 4-β-Sulfatoäthylsulfonyl- 2-amino-phenol | do. | 1-(4′-Chlor-6′-amino- s-triazin-2′-yl) -amino-3,6-disulfo-8-naphthol | dunkelblau |
| 16 | 5-β-Sulfatoäthylsulfonyl- 2-amino-phenol | do. | do. | dunkelblau |
| 17 | 4-β-Sulfatoäthylsulfonyl-2-amino-phenol-6- sulfonsäure | do. | do. | dunkelblau |

| Bsp. | Aminophenol (10) | Aminonaphthol (14) | Triazinylaminonaphthol (4) | Nuance |
|---|---|---|---|---|
| 18 | 4-β-Sulfatoäthylsulfonyl-2- aminophenol | 6-Amino-1-naphthol-3-sulfonsäure | 1-[4'-Chlor-6'-(3''-β-sulfatoäthylsulfonyl-phenylamino) -s-triazin-2'-yl]- amino-3,6-disulfo-8-naphthol | marineblau |
| 19 | 5-β-Sulfatoäthylsulfonyl-2- aminophenol | do. | do. | marineblau |
| 20 | 4-β-Sulfatoäthylsulfonyl-2-aminophenol- 6-sulfonsäure | do. | do. | marineblau |
| 21 | 4-β-Sulfatoäthylsulfonyl- 2-aminophenol | do. | 1-[4'-Chlor-6'- (4''-β-sulfatoäthylsulfonyl-phenylamino) -s-triazin-2'-yl] -amino-3,6-disulfo-8-naphthol | marineblau |
| 22 | 5-β-Sulfatoäthylsulfonyl- 2-amino-phenol | do. | do. | marineblau |
| 23 | 4-β-Sulfatoäthylsulfonyl-2-aminophenol-6- sulfonsäure | | 1-[4'-Chlor-6'- (4''-β-sulfatoäthylsulfonyl-phenylamino) -s-triazin-2'-yl]- amino-3,6-disulfo-8-naphthol | marineblau |
| 24 | 4-β-Sulfatoäthylsulfonyl-2- aminophenol | do. | 1-[4'-Chlor-6'-(N-methyl-N-phenyl-amino)-s-triazin-2'-yl] -amino-3,6-disulfo- 8-naphthol | dunkelblau |
| 25 | 5-β-Sulfatoäthylsulfonyl-2- aminophenol | do. | do. | dunkelblau |
| 26 | 4-β-Sulfatoäthylsulfonyl-2-aminophenol-6- sulfonsäure | do. | do. | dunkelblau |
| 27 | 4-β-Sulfatoäthylsulfonyl-2- aminophenol | do. | 1-[4'-Chlor-6'- (4''-sulfophenylamino) -triazin-2'-yl] -amino-3,6-disulfo- 8-naphthol | dunkelblau |
| 28 | 5-β-Sulfatoäthylsulfonyl-2- aminophenol | do. | do. | dunkelblau |
| 29 | 4-β-Sulfatoäthylsulfonyl-2-aminophenol-6- sulfonsäure | do. | do. | dunkelblau |
| 30 | 4-β-Sulfatoäthylsulfonyl-2- aminophenol | do. | 1-(4'-Chlor-6'-äthylamino-triazin-2'-yl-amino-3,6-disulfo-8-naphthol | dunkelblau |
| 31 | 4-β-Sulfatoäthylsulfonyl-2-aminophenol- 6-sulfonsäure | do. | do. | dunkelblau |

| Bsp. | Aminophenol (10) | Aminonaphthol (14) | Triazinylaminonaphthol (4) | Nuance |
|---|---|---|---|---|
| 32 | 4-β-Sulfatoäthylsulfonyl-2- aminophenol | 6-Amino-1-naphthol-3-sulfonsäure | 1-[4'-Chlor-6'- (N-methyl-N-β-sulfatothyl-amino)-triazin- 2'-yl]- amino-3,6-disulfo-8-naphthol | dunkelblau |
| 33 | 5-β-Sulfatoäthylsulfonyl-2- aminophenol | do. | 1-[4'-Chlor-6'- (N-methyl-N-β-sulfatoäthyl-amino) -triazin-2'-yl]- amino-3,6-disulfo-8-naphthol | dunkelblau |
| 34 | 4-β-Sulfatoäthylsulfonyl-2- aminophenol- 6-sulfonsäure | do. | do. | dunkelblau |
| 35 | 4-β-Sulfatoäthylsulfonyl-2- aminophenol | do. | 1-[4'-Chlor-6'- (β-sulfo-äthyl) -amino-triazin-2'-yl] -amino-3,6-disulfo-8- naphthol | dunkelblau |
| 36 | 5-β-Sulfatoäthylsulfonyl-2- aminophenol | do. | do. | dunkelblau |
| 37 | 4-β-Sulfatoäthylsulfonyl-2- aminophenol- 6-sulfonsäure | do. | do. | dunkelblau |
| 38 | do. | do. | 1-(4'-Chlor-6'-β- sulfatoäthylaminotriazin-2'-yl) -amino-3,6-disulfo-8-naphthol | dunkelblau |
| 39 | 5-β-Sulfatoäthylsulfonyl-2- aminophenol | do. | do. | dunkelblau |
| 40 | 4-β-Sulfatoäthylsulfonyl-2- aminophenol-6-sulfonsäure | do. | do. | dunkelblau |
| 41 | 4-β-Sulfatoäthylsulfonyl-2-aminophenol | do. | 1-[4'-Chlor-6'-(3''-methyl-phenylamino) -triazin-2'-yl]-amino-3,6-disulfo-8- naphthol | dunkelblau |
| 42 | 5-β-Sulfatoäthylsulfonyl-2- aminophenol | do. | do. | dunkelblau |
| 43 | 4-β-Sulfatoäthylsulfonyl-2- aminophenol-6-sulfonsäure | do. | do. | dunkelblau |
| 44 | do. | 7-Amino-1-naphthol-3-sulfonsäure | do. | rotstichig blau |

| Bsp. | Aminophenol (10) | Aminonaphthol (14) | Triazinylaminonaphthol (4) | Nuance |
|---|---|---|---|---|
| 45 | 4-β-Sulfatoäthylsulfonyl-2- aminophenol-6-sulfonsäure | 7-Amino-1-naphthol-3-sulfonsäure | 1-[4′-Chlor-6′-(3″-sulfo-phenylamino)-triazin-2′-yl] -amino-3,6- disulfo-8-naphthol | rotstichig blau |
| 46 | 4-β-Sulfatoäthylsulfonyl-2- aminophenol | do. | do. | rotstichig blau |
| 47 | 5-β-Sulfatoäthylsulfonyl- 2-aminophenol | do. | do. | rotstichig blau |
| 48 | do. | 7-Amino-1-naphthol-3,6-disulfonsäure | do. | blau |
| 49 | 4-β-Sulfatoäthylsulfonyl-2- aminophenol | do. | do. | blau |
| 50 | 4-β-Sulfatoäthylsulfonyl-2- aminophenol-6-sulfonsäure | do. | do. | blau |
| 51 | 5-β-Sulfatoäthylsulfonyl-2- aminophenol | 6-Amino-1-naphthol-3,5-disulfonsäure | do. | dunkelblau |
| 52 | 4-β-Sulfatoäthylsulfonyl-2- aminophenol- 6-sulfonsäure | 6-Amino-1-naphthol-3,5-disulfonsäure | 1-[4′-Chlor-6′-(3″-sulfo-phenylamino)-triazin-2′-yl] -amino-3,6-disulfo- 8-naphthol | dunkelblau |
| 53 | do. | do. | 1-[4′-Chlor-6′- (N-methyl-N-phenylamino) -triazin-2′-yl] -amino-3,6-disulfo- 8-naphthol | dunkelblau |
| 54 | 5-β-Sulfatoäthylsulfonyl-2- aminophenol | do. | do. | dunkelblau |
| 55 | 4-β-Sulfatoäthylsulfonyl-2- aminophenol | do. | do. | dunkelblau |
| 56 | do. | do. | 1-(4′-Chlor-6′-amino-triazin-2′-yl)-amino-3,6-disulfo-8-naphthol | dunkelblau |
| 57 | 5-β-Sulfatoäthylsulfonyl-2- aminophenol | do. | do. | dunkelblau |
| 58 | 4-β-Sulfatoäthylsulfonyl-2- aminophenol-6-sulfonsäure | do. | do. | dunkelblau |

| Bsp. | Aminophenol (10) | Aminonaphthol (14) | Triazinylaminonaphthol (4) | Nuance |
|---|---|---|---|---|
| 59 | 4-β-Sulfatoäthylsulfonyl-2-aminophenol-6-sulfonsäure | 6-Amino-1-naphthol-3-sulfonsäure | 1-[4'-Chlor-6'-(3''-sulfo-phenylamino)-triazin-2'-yl]-amino-4,6-disulfo-8-naphthol | dunkelblau |
| 60 | 5-β-Sulfatoäthylsulfonyl-2-aminophenol | do. | do. | dunkelblau |
| 61 | 4-β-Sulfatoäthylsulfonyl-2-aminophenol | do. | do. | dunkelblau |
| 62 | 4-β-Sulfatoäthylsulfonyl-2-aminophenol | 6-Amino-1-naphthol-3-sulfonsäure | 1-(4'-Chlor-6'-amino-triazin-2'-yl)-amino-4,6-disulfo-8-naphthol | dunkelblau |
| 63 | 5-β-Sulfatoäthylsulfonyl-2-aminophenol | do. | do. | dunkelblau |
| 64 | 4-β-Sulfatoäthylsulfonyl-2-aminophenol-6-sulfonsäure | do. | do. | dunkelblau |

Beispiel 65

a) Ein Gemisch aus einer Lösung von 68,9 Teilen der Kupferkomplexverbindung der 1-Hydroxy-6-amino-2- [(2'-hydroxy-5'- β-sulfatoäthylsulfonyl-phenyl) -azo]-naphthalin- 3,3'-disulfonsäure in 350 ml Teilen Wasser und 22 Volumenteilen einer wässrigen 5n-Natriumnitritlösung mit einer Temperatur von 5 bis 10 °C wird unter Rühren in ein Gemisch aus 30 Volumenteilen einer 31%igen Salzsäure und 500 Teilen Eis einlaufen lassen; hierbei wird die Temperatur bei 5 bis 10 °C gehalten. Es wird noch 60 Minuten bei dieser Temperatur weitergerührt und anschliessend überschüssige salpetrige Säure, wie üblich, mit wenig Amidosulfonsäure zerstört. Mittels Natriumbicarbonat wird ein pH-Wert von 5,9 bis 6,1 eingestellt.

b) Getrennt hiervon wird die im Beispiel 1 b) beschriebene Lösung des sekundären Kondensationsproduktes aus 1-Amino-8-naphthol- 3,6-disulfonsäure, Cyanurchlorid und Anilin-3-sulfonsäure in einem doppelten Ansatz hergestellt.

c) Die hier unter a) hergestellte Lösung des Diazoniumsalzes der Kupferkomplex-Azoverbindung und die unter b) hergestellte Lösung des sekundären Kondensationsproduktes werden bei einer Temperatur von 5 bis 10 °C vereinigt. Man rührt das Reaktionsgemisch bei einem pH von 5,8 bis 6,3 und einer Temperatur zwischen 8 und 10 °C noch mehrere Stunden bis zur Beendigung der Kupplungsreaktion weiter. Sodann setzt man 10 Teilen Kieselgur hinzu, filtriert die Lösung bei 35 bis 40 °C und fällt aus dem Filtrat die erfindungsgemässe Verbindung mittels Kaliumchlorid aus, filtriert sie ab, trocknet sie und mahlt sie. Es wird ein schwarzes Pulver erhalten, das neben Elektrolytsalzen das Alkalimetallsalz, vorwiegend Kaliumsalz, der Verbindung der Formel

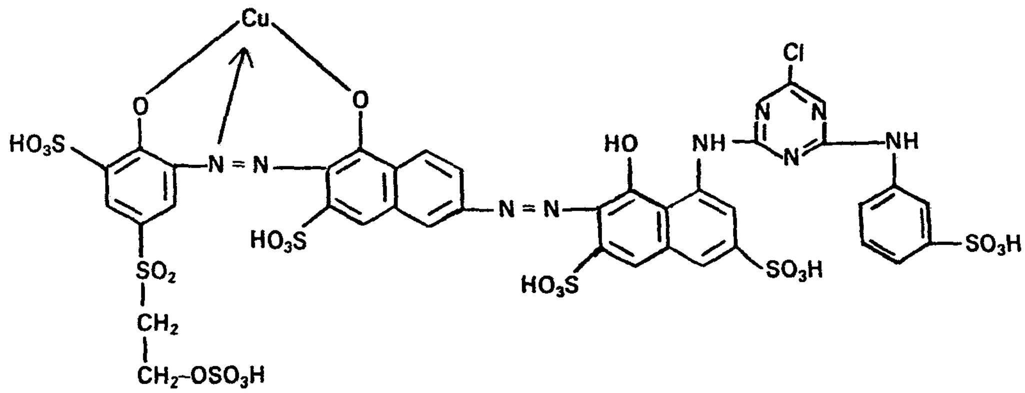

enthält. Sie zeigt sehr gute Farbstoffeigenschaften und liefert nach den in der Technik für – insbesondere faserreaktive – Farbstoffe üblichen Anwendungs- und Fixiermethoden auf den in der Beschreibung genannten Materialien, insbesondere auf Cellulosefasermaterialien, wie Baumwolle, farbstarke dunkelblaue Färbungen und Drucke mit sehr guten Echtheiten, von denen insbesondere die Licht-, Wasch-, Wasser-, Schweiss-, Reib-, Bügel- und Lösungsmittelechtheiten hervorgehoben werden können.

Diese erfindungsgemässe Kupferkomplex-Disazoverbindung ist mit der im Beispiel 14 beschriebenen erfindungsgemässen Verbindung identisch. – Die als Ausgangsverbindung dienende, anfangs unter a) erwähnte Kupferkomplex-Monoazoverbindung kann nach der in der deutschen Patentschrift 2 049 664 beschriebenen Verfahrensweise hergestellt werden.

Beispiel 66

a) 93,8 Teile der Kupferkomplex-Disazoverbindung der Formel

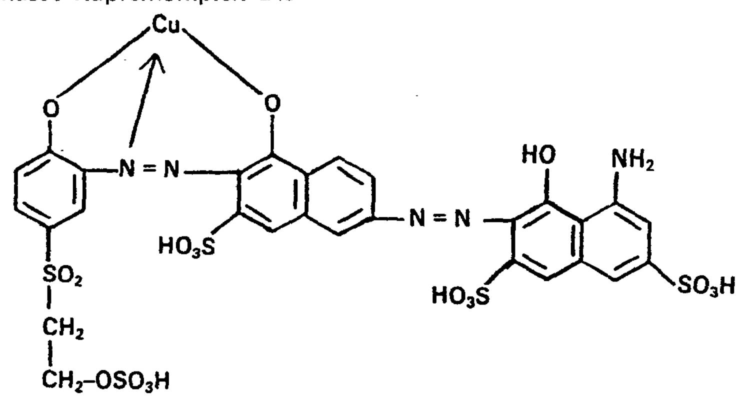

(die analog dem Beispiel 1 der deutschen Auslegeschrift 1 644 155 hergestellt werden kann, wobei man anstelle der 39,7 Teile 1-Acetylamino-8-naphthol- 3,6-disulfonsäure 31,9 Teile 1-Amino-8-naphthol- 3,6-disulfonsäure einsetzt), in Form des Natrium- oder Kaliumsalzes, werden in 1000 Teilen Wasser bei 50 °C gelöst. Die Lösung wird auf einen pH-Wert von 3,0 bis 3,5 eingestellt und sodann auf 5 bis 10 °C abgekühlt. Man gibt eine Lösung von 19,5 Teilen Cyanurchlorid in 100 Volumenteilen Aceton unter Konstanthaltung des pH-Wertes mittels Natriumbicarbonat langsam hinzu.

b) Nach beendeter Kondensationsreaktion wird die Lösung mit Dinatriumhydrogenphosphat auf einen pH-Wert von 5,5 eingestellt und sprühgetrocknet.

Man erhält ein schwarzes Pulver, das neben Elektrolytsalzen das Alkalimetallsalz, wie Natriumsalz, der Verbindung der Formel

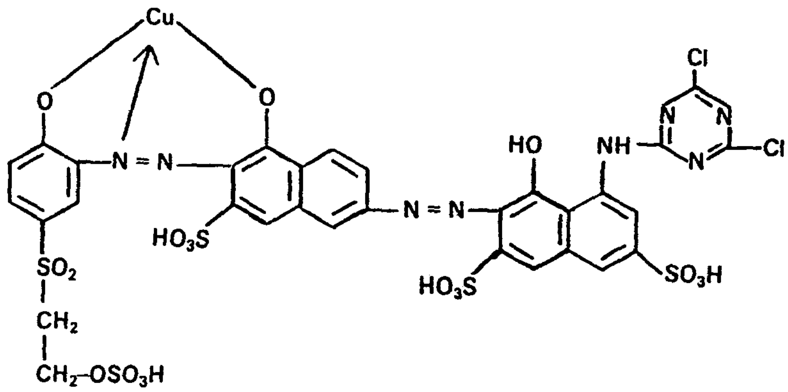

enthält. Diese besitzt sehr gute faserreaktive Farbstoffeigenschaften und liefert auf den in der Beschreibung genannten Fasermaterialien, wie insbesondere Cellulosefasermaterialien, nach den in der Technik für Reaktivfarbstoffe gebräuchlichen Färbe- und Druckverfahren farbstarke dunkelblaue Färbungen und Drucke, die sehr gute Echtheiten, wie insbesondere Licht-, Wasch-, Wasser-, Lösungsmittel-, Reib- und Bügelechtheiten, besitzen.

Diese erfindungsgemässe Kupferkomplex-Disazoverbindung ist mit der erfindungsgemässen Verbindung des Beispieles 3 identisch.

Beispiel 67

Zur Herstellung einer erfindungsgemässen Kupferkomplex-Disazoverbindung verfährt man gemäss der Verfahrensweise des Beispieles 66 a) und gibt nach beendeter Kondensationsreaktion 17,3 Teile Anilin-3-sulfonsäure hinzu und führt die zweite Kondensationsreaktion bei einer Temperatur von 50 °C und einem pH-Wert von 5,5 bis 6,0 einige Stunden fort. Anschliessend wird die erfindungsgemässe Verbindung durch Sprühtrocknung isoliert.

Man erhält ein schwarzes Pulver, das neben Elektrolytsalzen das Alkalimetallsalz, wie Natriumsalz, der Verbindung der Formel

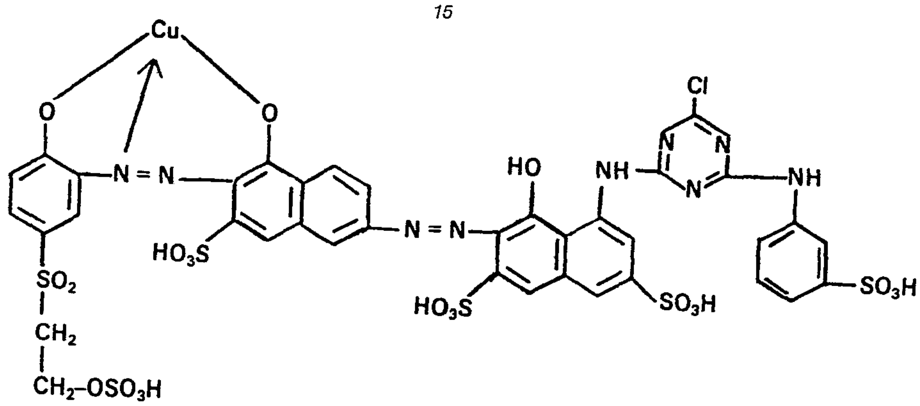

enthält. Diese erfindungsgemässe Verbindung zeigt ebenfalls sehr gute faserreaktive Farbstoffeigenschaften und liefert auf den in der Beschreibung genannten Materialien, wie insbesondere Cellulosefasermaterialien, nach den in der Technik für faserreaktive Farbstoffe üblichen Druck- und Färbeverfahren farbstarke dunkelblaue Färbungen und Drucke mit sehr guten Echtheiten, wie insbesondere einer sehr guten Licht-, Wasch-, Wasser-, Lösungsmittel- und Reibechtheit.

Diese erfindungsgemässe Kupferkomplex-Disazoverbindung ist mit der erfindungsgemässen Verbindung des Beispiels 12 identisch.

Beispiel 68

Zur Herstellung einer erfindungsgemässen Kupferkomplex-Disazoverbindung verfährt man gemäss der Verfahrensweise des Beispieles 66, setzt jedoch anstelle der dort verwendeten Kupferkomplex-Disazoverbindung mit der β-Sulfatoäthylsulfonyl-Gruppe als Ausgangsverbindung 95,4 Teile der entsprechenden β-Thiosulfatoäthyl-Verbindung ein, die gemäss der im Beispiel 8 der deutschen Offenlegunsschrift 1 544 541 beschriebenen Verfahrensweise hergestellt werden kann.

Man erhält das Alkalimetallsalz, wie Natriumsalz, der Verbindung der Formel

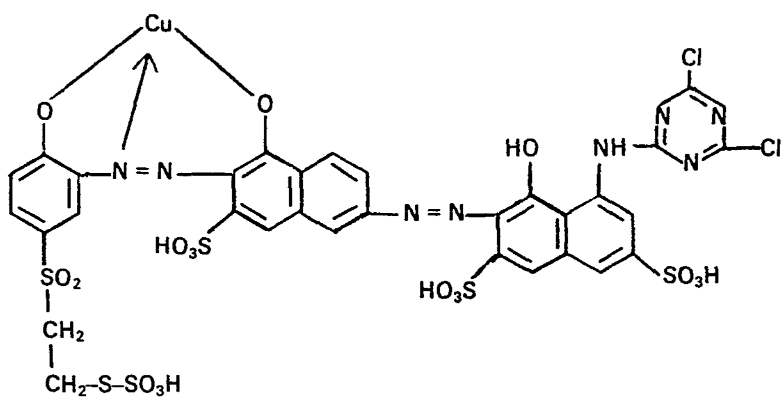

die ebenfalls sehr gute faserreaktive Farbstoffeigenschaften besitzt und nach den in der Technik üblichen Färbeweisen farbstarke, dunkelblaue Färbungen und Drucke mit den für den Farbstoff des Beispieles 66 angegebenen guten Echtheiten liefert.

Diese erfindungsgemässe Thiosulfatoäthylsulfonyl-Verbindung ist mit der erfindungsgemässen Verbindung des Beispieles 9 identisch.

Beispiel 69

Eine Lösung von 87,7 Teilen der metallfreien Disazoverbindung der Formel

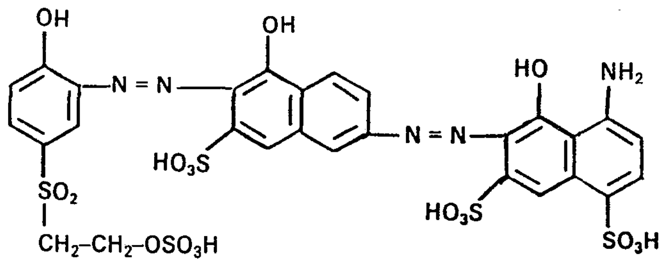

(die analog der Verfahrensweise des Beispieles 1a)–c) der deutschen Offenlegungsschrift 1 544 541 hergestellt werden kann, wobei man anstelle der 50 Teile 1-Amino-8-naphthol-2,4-disulfonsäure 50 Teile 1-Amino-8-naphthol-4,6-disulfonsäure einsetzt) in 900 Teilen Wasser wird bei einem pH-Wert von 6 bis 6,5 und bei einer Temperatur zwischen 50 und 55 °C mit dem primären Kondensationsprodukt aus 18,4 Teilen Cyanurchlorid und 17,3 Teilen Anilin-3-sulfonsäure versetzt.

Die Reaktion wird bei dem angegebenen pH-Wert und der angegebenen Temperatur bis zum Abschluss der Kondensation weitergeführt. Danach werden 25 Teile kristallisiertes Kupfersulfat und 20 Teile kristallisiertes Natriumacetat zugegeben und der pH-Wert noch eine Stunde bei 5,5 bis 6,5 gehalten. Die erfindungsgemässe Kupferkomplex-Disazoverbindung wird sodann mittels Natriumchlorid ausgesalzen. Sie besitzt, in Form der freien Säure geschrieben, die Formel

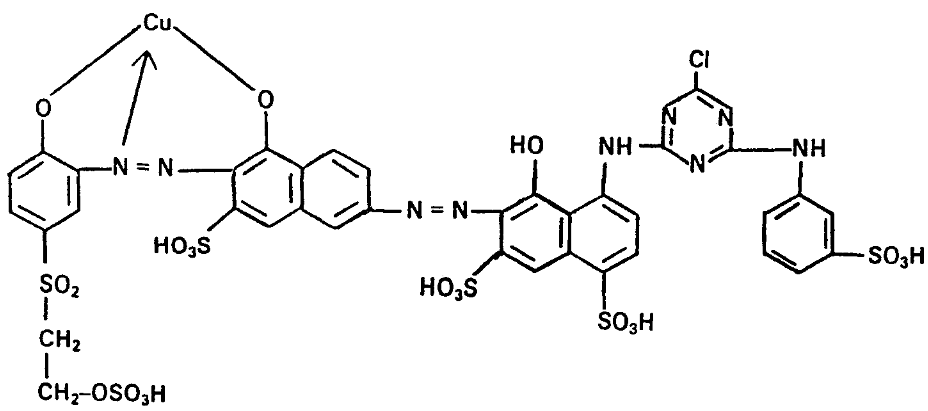

und liefert wegen ihrer sehr guten faserreaktiven Farbstoffeigenschaften auf den in der Beschreibung genannten Fasermaterialien, wie insbesondere Cellulosefasermaterialien, nach den in der Technik üblichen Anwendungsmethoden farbstarke, dunkelblaue Färbungen und Drucke mit sehr guten Echtheitseigenschaften.

Sie ist mit der erfindungsgemässen Verbindung des Beispieles 62 identisch.

Beispiel 70

80,2 Teile einer Monoazoverbindung, die durch alkalische Kupplung von diazotierter 6-Amino-1-naphthol- 3-sulfonsäure mit 1-Amino-8-naphthol- 3,6-disulfonsäure erhalten wird, wird als Trinatriumsalz in 900 Teilen Wasser bei 50 bis 60 °C gelöst. Die Lösung wird auf einen pH-Wert von 5,5 bis 6,0 eingestellt. Man gibt das primäre Kondensationsprodukt aus 18,4 Teilen Cyanurchlorid und 17,3 Teilen Anilin-3-sulfonsäure hinzu und setzt die Reaktion zum sekundären Kondensationsprodukt bei diesem pH-Wert (unter Zugabe von Natriumbicarbonat) und bei dieser Temperatur fort. Nach Beendigung der Reaktion gibt man zu diesem Ansatz Eis, bis eine Temperatur von 15 bis 20 °C erhalten wird. Sodann setzt man eine auf übliche Weise aus 29,7 Teilen 5-β-Sulfatoäthylsulfonyl-2- amino-phenol durch Diazotierung in saurer Lösung und anschliessende Neutralisation erhaltene Diazoniumsalzlösung hinzu und führt die Kupplungsreaktion bei einem pH-Wert von 6,0 bis 6,5 und bei etwa 20 °C durch. Nach beendeter Kupplung wird mit wenig Essigsäure ein pH-Wert von 5,1 eingestellt; 25 Teile kristallisiertes Kupfersulfat und 25 Teile kristallisiertes Natriumacetat werden zugegeben. Es wird etwa 4 Stunden bei 35 bis 40 °C weitergerührt, die erfindungsgemässe Kupferkomplex-Disazoverbindung mit Natriumchlorid ausgefällt, abgesaugt, getrocknet und gemahlen. Man erhält ein schwarzes elektrolythaltiges Pulver mit dem Natriumsalz der Verbindung der Formel

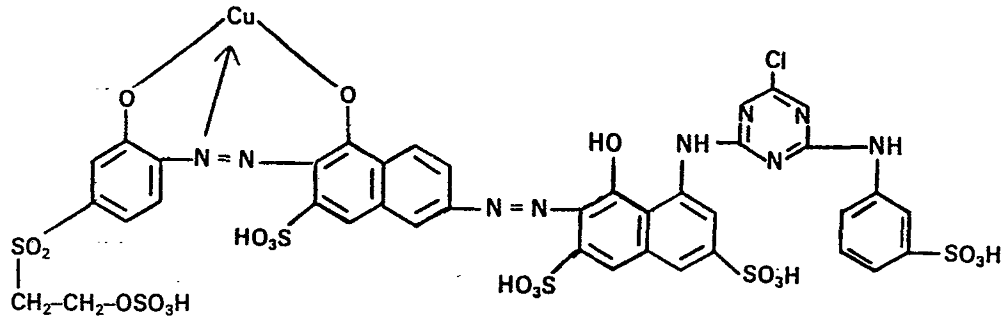

die ebenfalls sehr gute faserreaktive Farbstoffeigenschaften besitzt und gemäss den in der Beschreibung angegebenen Anwendungs- und Fixiermethoden farbstarke, dunkelblaue Färbungen und Drucke mit guten Echtheiten liefert. Diese erfindungsgemässe Kupferkomplex-Disazoverbindung ist mit der erfindungsgemässen Verbindung des Beispieles 13 identisch.

**Patentansprüche**

1. Wasserlösliche Kupferkomplex-Disazoverbindungen der allgemeinen Formel (1)

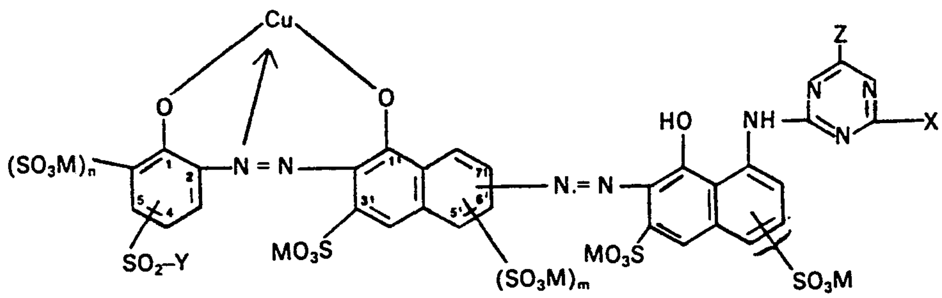

(1)

in welcher bedeuten:

m ist die Zahl Null oder 1 (wobei im Falle m=0 diese Gruppe Wasserstoff ist);

n ist die Zahl Null oder 1 (wobei im Falle n=0 diese Gruppe Wasserstoff ist);

die Gruppe $-SO_2-Y$ steht in 5-Stellung an den Benzolkern gebunden, wenn n gleich Null ist, oder steht in 4-Stellung an den Benzolkern gebunden, wenn n gleich Null oder 1 ist;

die freistehende Azogruppe kann an den mittelständigen Naphthalinkern in 6' oder 7'-Stellung gebunden sein;

sofern m gleich 1 ist, ist diese Sulfogruppe in 5'-Stellung gebunden, wenn die Azogruppe in 6'-Stellung steht, und ist in 6'-Stellung gebunden, wenn die Azogruppe in 7'-Stellung steht;

X ist ein Chloratom oder eine Gruppe der Formel (2a), (2b) oder (2c)

$$-O-R^1 \qquad -S-R^2 \qquad -N{<}^{R^3}_{R^4}$$

(2a) (2b) (2c)

in welchen

$R^1$ eine geradkettige oder verzweigte Alkylgruppe von 1 bis 4 C-Atomen bedeutet, die substituiert sein kann, oder einen gegebenenfalls substituierten Arylrest bedeutet oder für ein Wasserstoffatom steht,

$R^2$ eine geradkettige oder verzweigte Alkylgruppe von 1 bis 4 C-Atomen bedeutet, die substituiert sein kann, oder für einen gegebenenfalls substituierten Arylrest steht,

$R^3$ ein Wasserstoffatom ist oder eine geradkettige oder verzweigte Alkylgruppe von 1 bis 4 C-Atomen bedeutet, die substituiert sein kann, und

$R^4$ ein Wasserstoffatom ist oder für eine Cycloalkylgruppe, die durch 1 bis 3 Methylgruppen substituiert sein kann, steht oder eine geradkettige oder verzweigte Alkylgruppe von 1 bis 4 C-Atomen bedeutet, die substituiert sein kann, oder ein gegebenenfalls substituierter Arylrest ist, wobei $R^3$ und $R^4$ zueinander gleich oder voneinander verschieden sein können, oder

$R^3$ und $R^4$ bilden als Alkylenreste von 1 bis 4 C-Atomen zusammen mit dem Stickstoffatom und gegebenenfalls einem Sauerstoff-, Schwefel- oder Stickstoffatom als weiterem Heteroatom einen heterocyclischen 6-gliedrigen Rest;

Y ist die Vinylgruppe oder eine Gruppe der allgemeinen Formel (2d)

$$-CH_2-CH_2-R \qquad (2d)$$

in welcher

R einen alkalisch eliminierbaren, anorganischen oder organischen Rest bedeutet;

Z ist ein Chloratom;

M ist ein Wasserstoffatom oder das Äquivalent eines Metalls.

2. Kupferkomplex-Disazoverbindungen nach Anspruch 1 der allgemeinen Formel

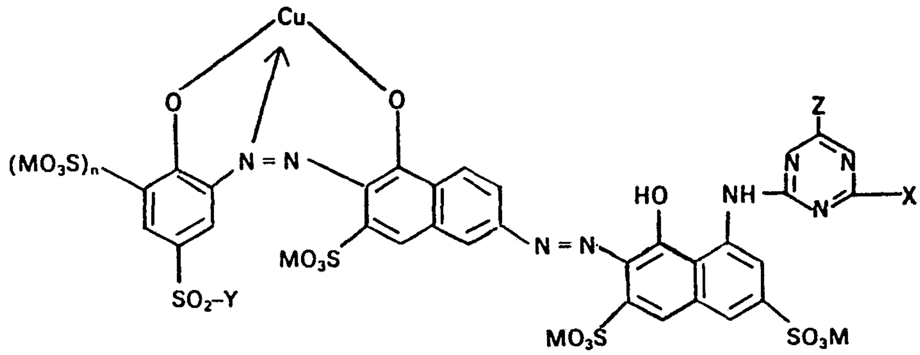

in welcher n, M, X, Y und Z die in Anspruch 1 genannten Bedeutungen haben.

3. Kupferkomplex-Disazoverbindungen nach Anspruch 1 der allgemeinen Formel

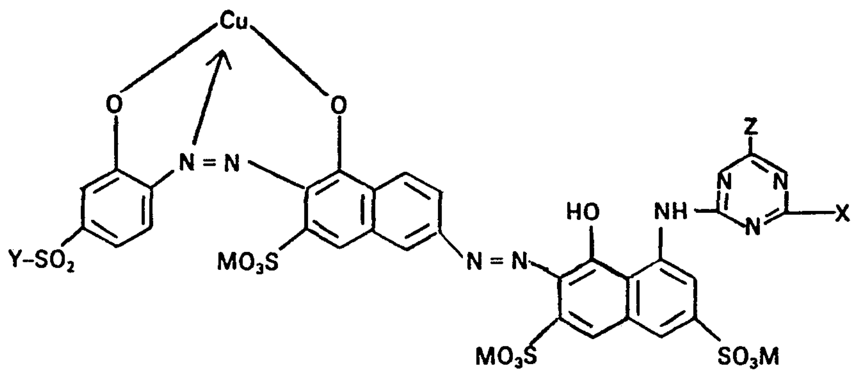

in welcher M, X, Y und Z die in Anspruch 1 genannten Bedeutungen haben.

4. Kupferkomplex-Disazoverbindungen nach Anspruch 1 der allgemeinen Formel

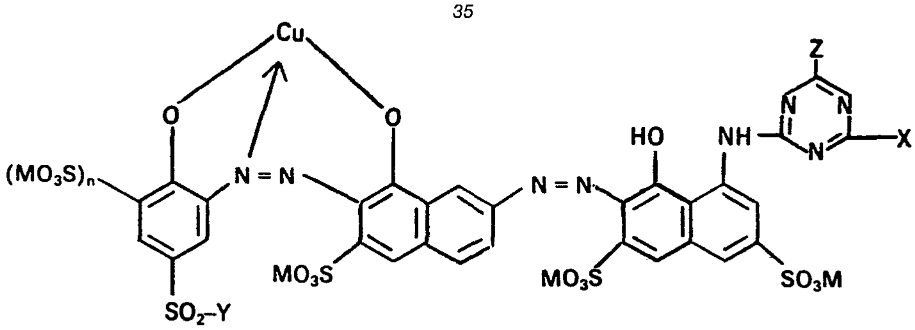

in welcher n, M, X, Y und Z die in Anspruch 1 genannten Bedeutungen haben.

5. Kupferkomplex-Disazoverbindungen nach Anspruch 1 der allgemeinen Formel

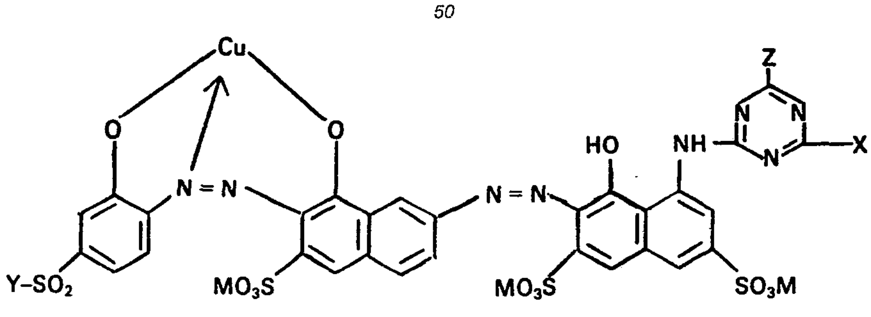

in welcher M, X, Y und Z die in Anspruch 1 genannten Bedeutungen haben.

6. Kupferkomplex-Disazoverbindungen nach Anspruch 1, 2, 3, 4 oder 5, dadurch gekennzeichnet, dass X eine Gruppe der allgemeinen Formel

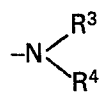

ist, in welcher $R^3$ und $R^4$ zueinander gleiche oder voneinander verschiedene Bedeutungen besitzen und $R^3$ ein Wasserstoffatom oder eine Alkylgruppe von 1 bis 4 C-Atomen bedeutet, die durch einen oder zwei Substituenten aus der Gruppe Acetylamino, Hydroxy, Sulfato, β-Sulfatoäthylsulfonyl, Vinylsulfonyl, β-Thiosulfatoäthylsulfonyl, Alkoxy von 1 bis 4 C-Atomen, Sulfo, Carboxy, Phenyl, Naphthyl, durch Sulfo, Carboxy, β-Sulfatoäthylsulfonyl, Vinylsulfonyl, β-Thiosulfatoäthylsulfonyl, Alkyl von 1 bis 4 C-Atomen, Alkoxy von 1 bis 4 C-Atomen, Chlor, Sulfamoyl und/oder Carbamoyl substituiertes Phenyl und durch Sulfo, Carboxy, β-Sulfatoäthylsulfonyl, Vinylsulfonyl, β-Thiosulfatoäthylsulfonyl, Alkoxy von 1 bis 4 C-Atomen, Alkyl von 1 bis 4 C-Atomen, Chlor, Sulfamoyl und/oder Carbamoyl substituiertes Naphthyl substituiert sein kann, und $R^4$ für ein Wasserstoffatom oder eine Cyclopentyl- oder Cyclohexylgruppe steht, die durch 1 bis 3 Methylgruppen substituiert sein können, oder eine Alkylgruppe von 1 bis 4 C-Atomen bedeutet, die durch einen oder zwei Substituenten aus der Gruppe Acetylamino, Hydroxy, Sulfato, β-Sulfatoäthylsulfonyl, Vinylsulfonyl, β-Thiosulfatoäthylsulfonyl, Alkoxy von 1 bis 4 C-Atomen, Sulfo, Carboxy, Phenyl, Naphthyl, durch Sulfo, Carboxy, β-Sulfatoäthylsulfonyl, Vinylsulfonyl, β-Thiosulfatoäthylsulfonyl, Alkyl von 1 bis 4 C-Atomen, Alkoxy von 1 bis 4 C-Atomen, Chlor, Sulfamoyl und/oder Carbamoyl substituiertes Phenyl und durch Sulfo, Carboxy, β-Sulfatoäthylsulfonyl, Vinylsulfonyl, β-Thiosulfatoäthylsulfonyl, Alkoxy von 1 bis 4 C-Atomen, Alkyl von 1 bis 4 C-Atomen, Chlor, Sulfamoyl und/oder Carbamoyl substituiertes Naphthyl substituiert sein kann, oder ein Phenylrest oder Naphthylrest ist, die durch Substituenten aus der Gruppe Carboxy, Sulfo, Alkyl von 1 bis 4 C-Atomen, Alkoxy von 1 bis 4 C-Atomen, Hydroxy, Chlor, β-Sulfatoäthylsulfonyl, Vinylsulfonyl, β-Thiosulfatoäthylsulfonyl, Alkanoylamino von 1 bis 4 C-Atomen im Alkylrest und Carbalkoxy mit 1 bis 4 C-Atomen im Alkylrest substituiert sein können, oder in welcher $R^3$ und $R^4$ zusammen mit dem Stickstoffatom den Morpholin-, Thiomorpholin-, Piperazin- oder Piperidinrest bilden.

7. Verbindungen nach einem der Ansprüche 1 bis 6, dadurch gekennzeichnet, dass Y für die β-Sulfatoäthyl- oder die Vinylgruppe steht.

8. Verbindungen nach einem der Ansprüche 1 bis 7, dadurch gekennzeichnet, dass n die Zahl 1 bedeutet.

9. Verbindungen nach Anspruch 1 der allgemeinen Formel

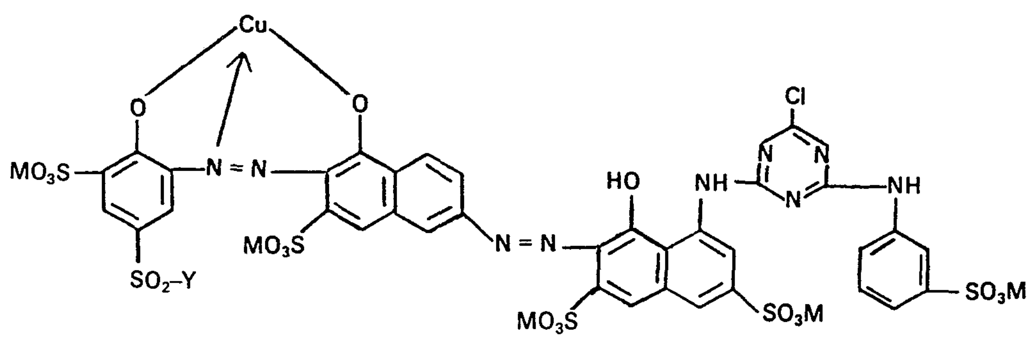

in welcher Y für die β-Sulfatoäthyl- oder Vinylgruppe steht und M diein Anspruch 1 genannte Bedeutung besitzt.

10. Verbindungen nach Anspruch 1 der allgemeinen Formel

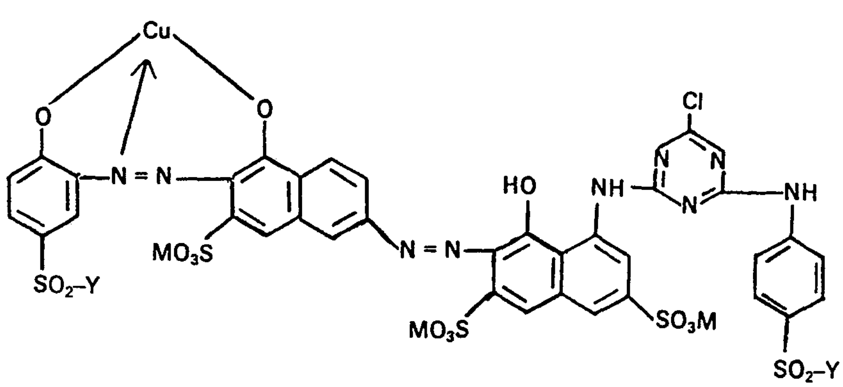

in welcher Y für die β-Sulfatoäthyl- oder die Vinylgruppe steht und M die in Anspruch 1 genannte Bedeutung besitzt.

11. Verbindungen nach einem der Ansprüche 1 bis 10, dadurch gekennzeichnet, dass M für Natrium oder Kalium steht.

12. Verfahren zur Herstellung der in Anspruch 1 genannten und definierten Kupferkomplex-Disazoverbindungen der allgemeinen Formel (1), dadurch gekennzeichnet, dass man

a) eine Kupferkomplex-Monoazoverbindung der allgemeinen Formel (3)

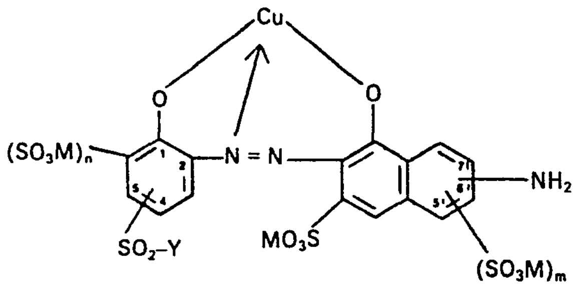

(3)

(in welcher m, n Y und M die in Anspruch 1 genannten Bedeutungen haben und die freistehende Aminogruppe in 6- oder 7'-Stellung an den Naphthalinkern gebunden ist, wobei im Falle, dass m gleich 1 ist, diese Sulfogruppe in 5'-Stellung an den Naphthalinkern gebunden ist, wenn die Aminogruppe in 6'-Stellung steht, und die Sulfogruppe in 6'-Stellung an den Naphthalinkern gebunden ist, wenn die Aminogruppe in 7'-Stellung steht) diazotiert und mit einer Verbindung der allgemeinen Formel (4)

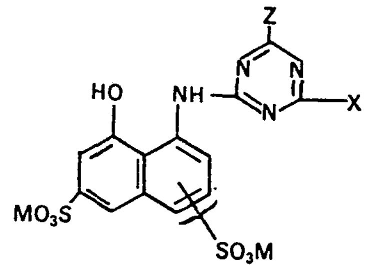

(4)

(in welcher M, X und Z die in Anspruch 1 genannten Bedeutungen besitzen) kuppelt oder dass man

b) eine o,o'-Dihydroxy-Azoverbindung der allgemeinen Formel (5)

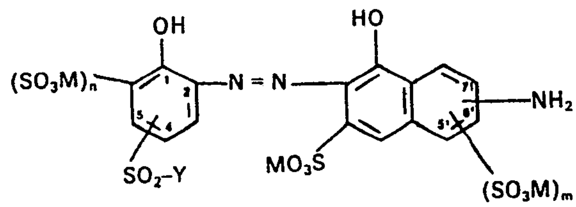

(5)

(in welcher M, Y, m und n die für Formel (1) bzw. Formel (3) angegebenen Bedeutungen haben) diazotiert und mit einer Verbindung der obengenannten und definierten allgemeinen Formel (4) kuppelt und diese metallfreie Disazoverbindung sodann mit einem kupferabgebenden Mittel behandelt oder dass man

c) eine Disazoverbindung der allgemeinen Formel (6)

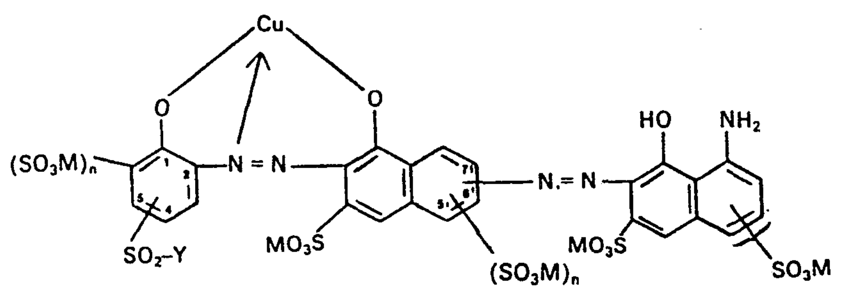

(6)

(in welcher M, Y, m und n die in Anspruch 1 genannten Bedeutungen haben) mit einer Dihalogeno-s-triazin-Verbindung der allgemeinen Formel (7)

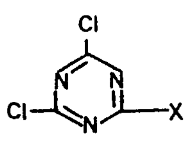

(7)

(in welcher X eine Gruppe der in Anspruch 1 genannten und definierten Formel (2a), (2b) oder (2c) ist) oder mit Cyanurchlorid umsetzt oder dass man

d) eine metallfreie Disazoverbindung der allgemeinen Formel (8)

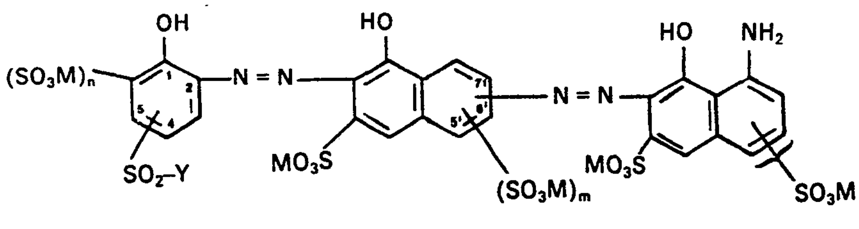

(8)

(in welcher M, Y, m und n die in Anspruch 1 genannten Bedeutungen haben) mit einer Dihalogeno-s-triazinverbindung der oben genannten und definierten allgemeinen Formel (7) oder mit Cyanurchlorid umsetzt und sodann mit einem kupferabgebenden MIttel behandelt oder dass man

e) eine Azoverbindung der allgemeinen Formel (9)

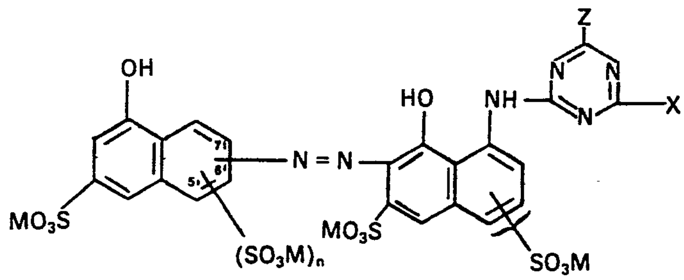

(9)

(in welcher M, m, X und Z die in Anspruch 1 genannten Bedeutungen haben) mit der Diazoniumverbindung eines Aminophenols der allgemeinen Formel (10)

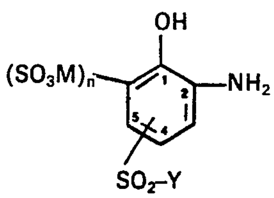

(10)

(in welcher Y und n die in Anspruch 1 genannten Bedeutungen haben und die Gruppe $-SO_2-Y$ sich in 4- oder 5-Stellung befindet, falls n gleich Null ist, und sich in 4-Stellung befindet, falls n gleich 1 ist) kuppelt und die Disazoverbindung mit einem kupferabgebenden Mittel behandelt, oder dass man

f) eine Kupferkomplex-Disazoverbindung der allgemeinen Formel (11)

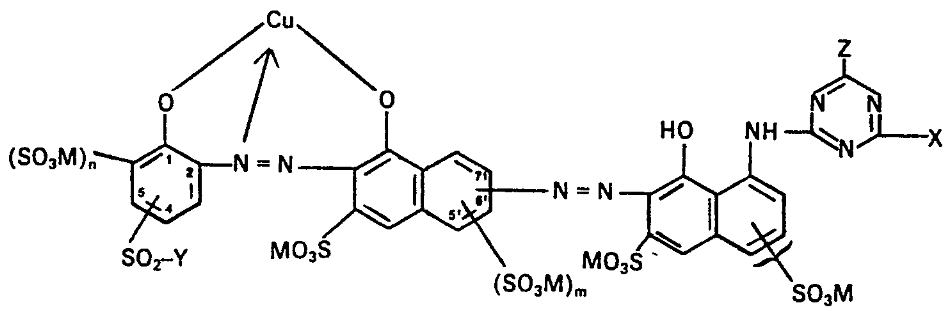

(11)

(in welcher M, m, n, Y und Z die in Anspruch 1 genannten Bedeutungen haben und X für ein Chloratom steht) mit einer Verbindung der allgemeinen Formel (12)

H–X (12)

(in welcher X eine Gruppe der in Anspruch 1 genannten und definierten Formel (2a), (2b) oder (2c) ist) umsetzt oder dass man

g) eine metallfreie o,o'-Dihydroxy-Disazoverbindung der allgemeinen Formel (13)

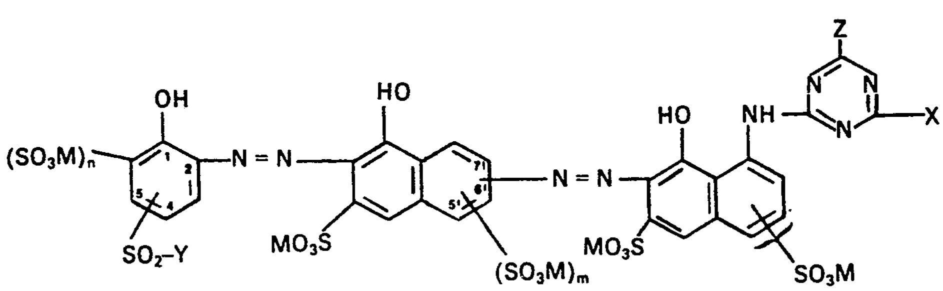

(13)

(in welcher M, m, n, Y, X und Z die in Anspruch 1 genannten Bedeutungen haben) mit einem kupferabgebenden Mittel behandelt.

13. Verwendung der in Anspruch 1 genannten und definierten oder der nach einem der Verfahren von Anspruch 13 hergestellten Verbindungen der allgemeinen Formel (1) zum Färben oder Bedrucken von hydroxy- und/oder carbonamidgruppenhaltigen Materialien.

**Revendications**

1. Composés disazoïques complexes de cuivre, hydrosolubles, de formule générale (1):

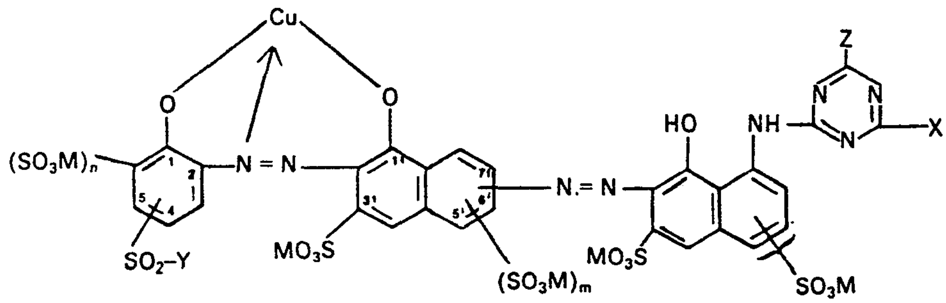

(1)

dans laquelle:

m est un nombre nul ou valant 1 (et, si m = 0, ce groupe est un atome d'hydrogène);

n est un nombre nul ou valant 1 (et, si n = 0, ce groupe est un atome d'hydrogène);

le groupe $-SO_2-Y$ est fixé en position 5 du noyau benzénique quand n est nul ou bien il est fixé en position 4 du noyau benzénique quand n est nul ou vaut 1;

le groupe azoïque libre peut être fixé en position 6' ou 7' sur le noyau naphtalénique median;

quand m vaut 1, ce groupe sulfo est fixé en position 5' quand le groupe azoïque est en position 6' et il est fixé en position 6' quand le groupe azoïque est en position 7';

X représente un atome de chlore ou un groupe de formules (2a), (2b) ou (2c):

$$-O-R^1 \qquad -S-R^2 \qquad -N\begin{matrix} R^3 \\ R^4 \end{matrix}$$

(2a) (2b) (2c)

dans lesquelles:

$R^1$ représente un groupe alkyle linéaire ou ramifié ayant 1 à 4 atomes de carbone qui peut être substitué, ou un reste aryle éventuellement substitué, ou bien il représente un atome d'hydrogène;

$R^2$ représente un groupe alkyle linéaire ou ramifié ayant 1 à 4 atomes de carbone, qui peut être substitué, ou un reste aryle éventuellement substitué,

$R^3$ est un atome d'hydrogène ou représente un groupe alkyle linéaire ou ramifié, ayant 1 à 4 atomes de carbone, qui peut être substitué et,

$R^4$ est un atome d'hydrogène ou représente un groupe cycloalkyle, qui peut être substitué par un à 3 groupe(s) méthyle(s), ou bien un groupe alkyle linéaire ou ramifié ayant 1 à 4 atomes de carbone, qui peut être substitué, ou un reste aryle éventuellement substitué,

$R^3$ et $R^4$ pouvant être identiques ou différer, ou bien

$R^3$ et $R^4$ forment, à titre de restes alkylènes ayant 1 à 4 atomes de carbone, avec l'atome d'azote et éventuellement un atome d'oxygène, de soufre ou d'azote comme autres hétéroatomes, un reste hétérocyclique hexagonal;

Y représente un groupe vinyle ou un groupe de formule générale (2d):

$$-CH_2-CH_2-R \qquad (2d)$$

dans laquelle

R représente un radical minéral ou organique, éliminable par voie alcaline;

Z est un atome de chlore;

M est un atome d'hydrogène ou représente l'équivalent d'un métal.

2. Composés disazoïques complexes de cuivre selon la revendication 1, de formule générale:

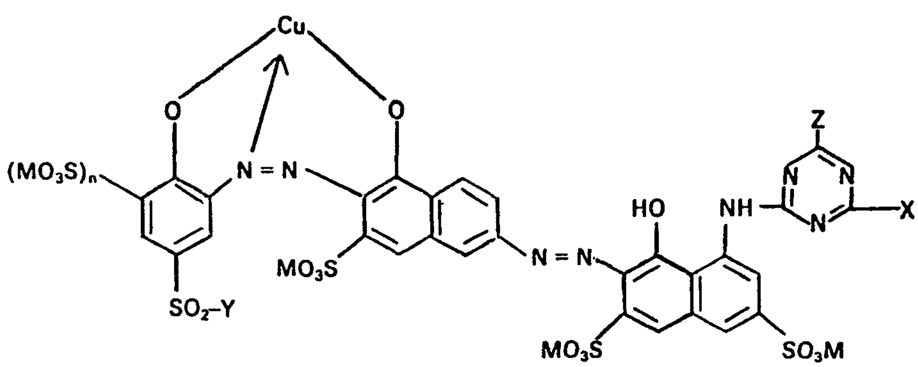

dans laquelle n, M, X, Y et Z ont les sens indiqués à la revendication 1.

3. Composés disazoïques complexes de cuivre selon la revendication 1, de formule générale:

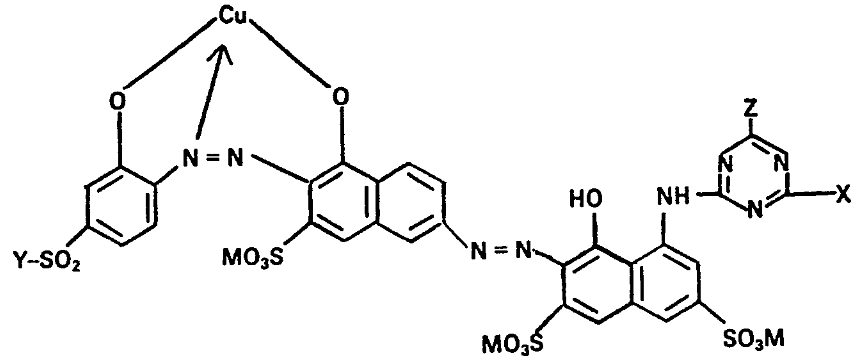

dans laquelle M, X, Y et Z ont les sens indiqués à la revendication 1.

4. Composés disazoïques complexes de cuivre selon la revendication 1, de formule générale:

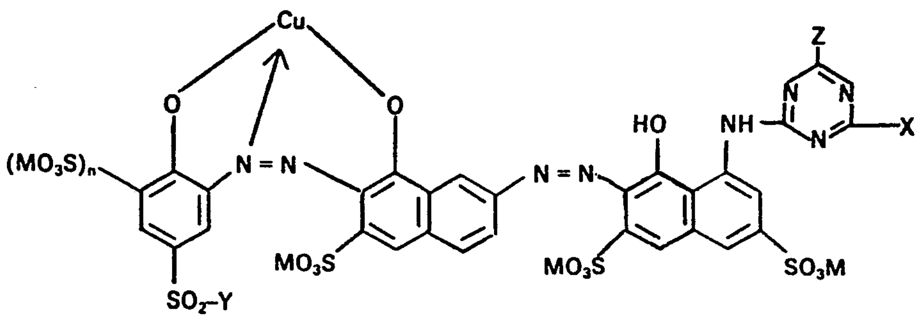

dans laquelle n, M, X, Y et Z ont les sens indiqués à la revendication 1.

5. Composés disazoïques complexes de cuivre selon la revendication 1, de formule générale:

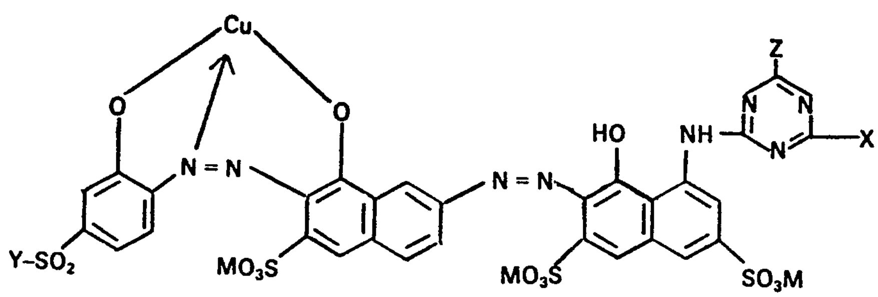

dans laquelle M, X, Y et Z ont les sens indiqués à la revendication 1.

6. Composés disazoïques complexes de cuivre selon la revendication 1, 2, 3, 4 ou 5, caractérisés en ce que X représente un groupe de formule générale:

$$-N\begin{matrix} R^3 \\ R^4 \end{matrix}$$

dans laquelle $R^3$ et $R^4$ ont des sens identiques ou différents, et $R^3$ représente un atome d'hydrogène ou un groupe alkyle ayant 1 à 4 atomes de carbone pouvant être substitué par 1 ou 2 substituants choisis parmi un groupe acétylamino, hydroxy, sulfato, β-sulfatoéthylsulfonyle, vinylsulfonyle, β-thiosulfato éthyl sulfonyle, alcoxy ayant 1 à 4 atomes de carbone, sulfo, carboxy, phényle, naphtyle, phényle (pouvant être substitué par un groupe sulfo, carboxy, β-sulfatoéthylsulfonyle, vinylsulfonyle, β-thiosulfatoéthylsulfonyle, alkyle ayant 1 à 4 atomes de carbone, alcoxy ayant 1 à 4 atomes de carbone, chloro, sulfamoÿle et/ou carbamoÿle) et naphtyle (pouvant être substitué par un groupe sulfo, carboxy, β-sulfatoéthylsulfonyle, vinylsulfonyle, β-thiosulfatoéthylsulfonyle, alcoxy ayant 1 à 4 atomes de carbone, alkyle ayant 1 à 4 atomes de carbone, chloro, sulfamoÿle et/ou carbamoÿle); et $R^4$ représente un atome d'hydrogène ou un groupe cyclopentyle ou cyclohexyle (pouvant être substitués par 1 à 3 groupes méthyles) ou un groupe alkyle ayant 1 à 4 atomes de carbone, qui peut être substitué par 1 ou 2 substituants choisis dans l'ensemble formé par un groupe acétylamino, hydroxy, sulfato, β-sulfatoéthylsulfonyle, vinylsulfonyle, β-thiosulfatoéthylsulfonyle, alcoxy ayant 1 à 4 atomes de carbone, sulfo, carboxy, phényle, naphtyle, phényle, naphtyle (substitués par un groupe sulfo, carboxy, β-sulfatoéthylsulfonyle, vinylsulfonyle, β-thiosulfatoéthylsul-

fonyle, alkyle ayant 1 à 4 atomes de carbone, alcoxy ayant 1 à 4 atomes de carbone, chloro, sulfamoÿle et/ou carbamoÿle) ou phényle ou naphtyle (pouvant être substitués par des substituants choisis parmi un groupe carboxy, sulfo, alkyle ayant 1 à 4 atomes de carbone, alcoxy ayant 1 à 4 atomes de carbone, hydroxy, chloro, β-sulfatoéthylsulfonyle, vinylsulfonyle, β-thiosulfatoéthylsulfonyle, alcanoÿlamino ayant 1 à 4 atomes de carbone dans le reste alkyle et carbalcoxy ayant 1 à 4 atomes de carbone dans le reste alkyle, ou $R^3$ et $R^4$ forment, avec l'atome d'azote, un reste morpholine, thiomorpholine, pipérazine ou pipéridine.

7. Composés selon l'une des revendications 1 à 6, caractérisés en ce que Y représente le groupe β-sulfatoéthyle ou le groupe vinyle.

8. Composés selon les revendications 1 à 7, caractérisés en ce que n représente le nombre 1.

9. Composés selon la revendication 1, de formule générale:

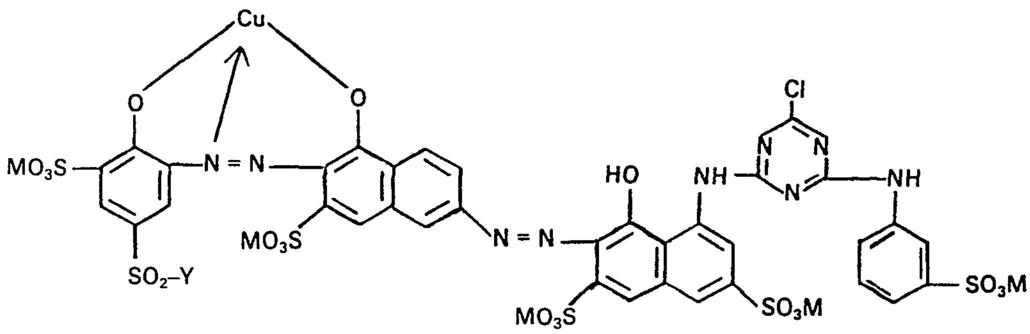

dans laquelle Y représente le groupe β-sulfatoéthyle ou le groupe vinyle, et M a le sens indiqué la revendication 1.

10. Composés selon la revendication 1, de formule générale:

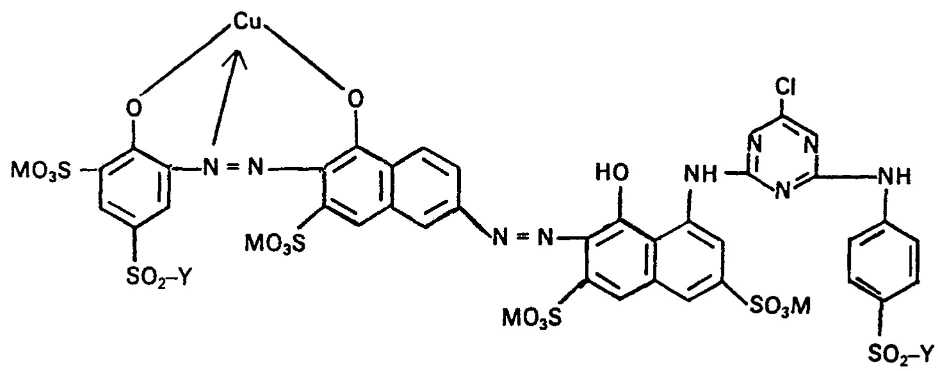

dans laquelle Y représente le groupe β-sulfatoéthyle ou le groupe vinyle, et M a le sens indiqué à la revendication 1.

11. Composés selon l'une des revendications 1 à 10, caractérisés en ce que M représente le sodium ou le potassium.

12. Procédés pour préparer les composés disazoïques complexes de cuivre de formule générale (1), cités et définis à la revendication 1, procédés caractérisés en ce que:

a) on diazote un composé monoazoïque complexe de cuivre de formule générale (3)

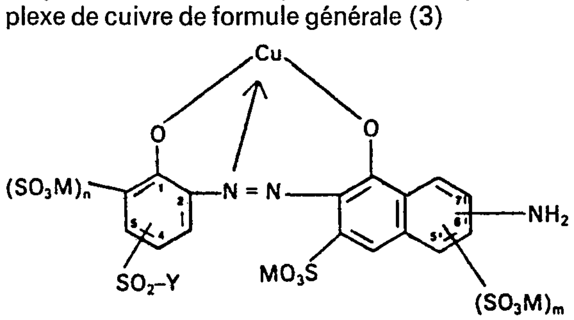

(3)

(dans laquelle m, n, Y et M ont les sens indiqués à la revendication 1, et le groupe amino libre est fixé en position 6' ou 7' du noyau naphtalénique, et, si m vaut 1, ce groupe sulfo est fixé en position 5' du noyau naphtalénique quand le groupe amino est en position 6', et le groupe sulfo est fixé en position 6' du noyau naphtalénique quand le groupe amino est en position 7') et l'on copule avec un composé de formule générale (4):

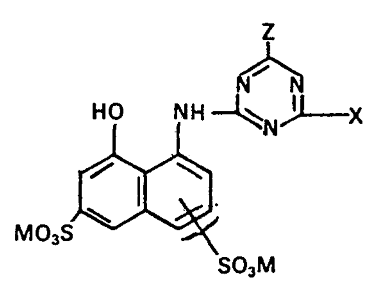

(4)

(dans laquelle M, X et Z ont les sens indiqués à la revendication 1), ou,

b) on diazote un composé o,o'-dihydroxyazoïque de formule générale

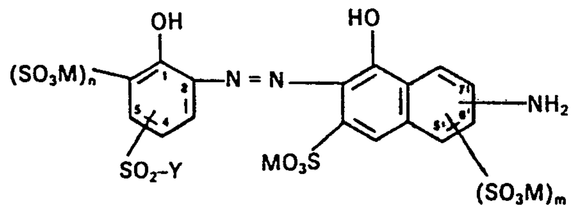

(5)

(dans laquelle M, Y, m et n ont les sens indiqués pour la formule (1) ou pour la formule (3) ) et l'on copule avec un composé de formule générale (4) citée et définie ci-dessus, et l'on traite ensuite ce composé diazoïque sans métal par un agent cédant du cuivre, ou

c) on fait réagir un composé disazoïque de formule générale (6):

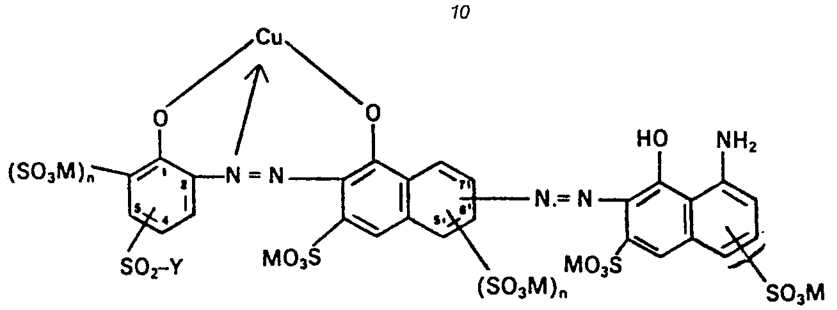

(6)

(dans laquelle M, Y, m et n ont les sens indiqués à la revendication 1) avec une dihalogéno-s-triazine de formule générale (7):

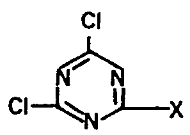

(7)

(dans laquelle X est un groupe de formule (2a), (2b) ou (2c) citées et définies à la revendication 1) ou avec le chlorure de cyanuryle, ou

d) on fait réagir un composé disazoïque sans métal, de formule générale (8):

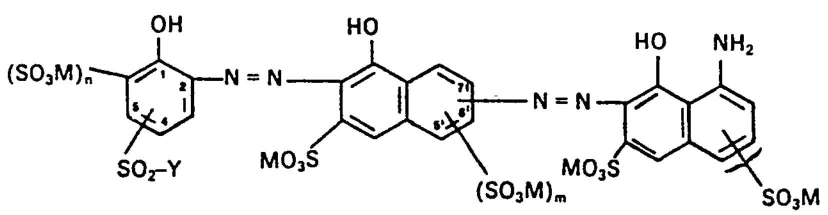

(8)

(dans laquelle M, Y, m et n ont les sens indiqués à la revendication 1) avec une dihalogéno-s-triazine de formule générale (7) citée et définie ci-dessus ou avec un chlorure de cyanuryle, puis l'on traite par un agent cédant du cuivre, ou

e) on copule un composé azoïque de formule générale (9):

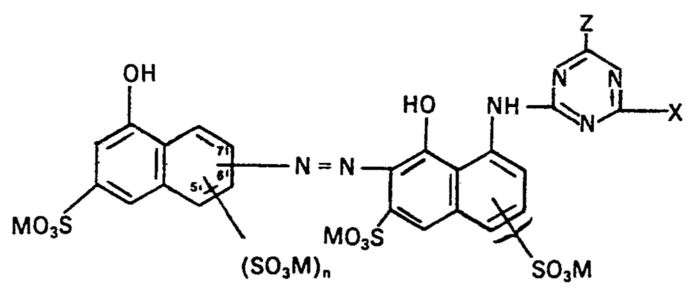

(9)

(dans laquelle M, m, X et Z ont les sens indiqués à la revendication 1) avec le composé de diazonium de formule générale (10):

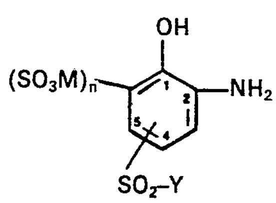

(10)

(dans laquelle Y et n ont les sens cités à la revendication 1 et le groupe $-SO_2-Y$ se trouve en position 4 ou 5, si n est nul, et se trouve en position 4 si n vaut 1) et l'on traite le composé de diazonium par un agent cédant du cuivre ou

f) on fait réagir un composé diazoïque complexe de cuivre de formule générale (11):

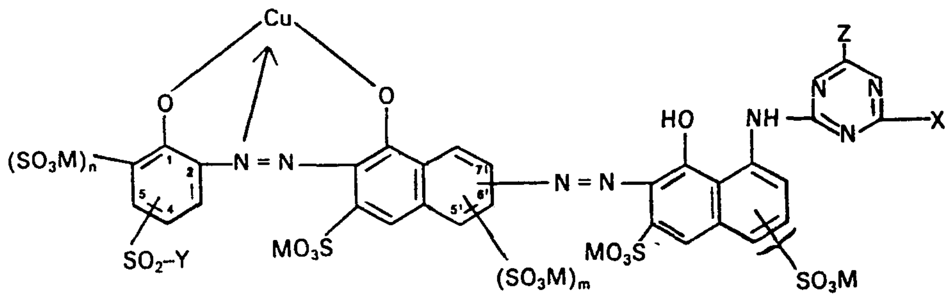

(11)

(dans laquelle M, m, n, Y et Z ont les sens cités à la revendication 1, et X représente un atome de chlore) avec un composé de formule générale (12):

H–X (12)

(dans laquelle X représente un groupe de formules (2a), (2b) ou (2c) citées ou définies dans la revendication 1) ou

g) on traite un composé o,o'-dihydroxy-disazoïque sans métal, de formule générale (13):

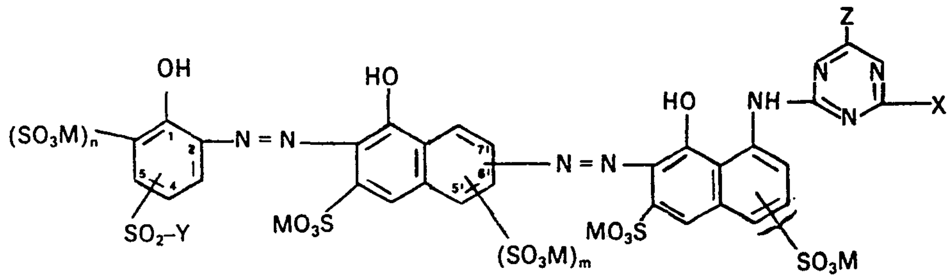

(13)

(dans laquelle M, m, n, Y, X et Z ont les sens cités à la revendication 1) par un agent cédant du cuivre.

13. Utilisation des composés de formule générale (1) cités et définis à la revendication 1 ou préparés selon l'un des procédés de la revendication 13, pour teindre ou pour imprimer des matières contenant des groupes hydroxy et/ou carboxamides.

**Claims**

1. Water-soluble copper-complex disazo compounds of the general formula (1)

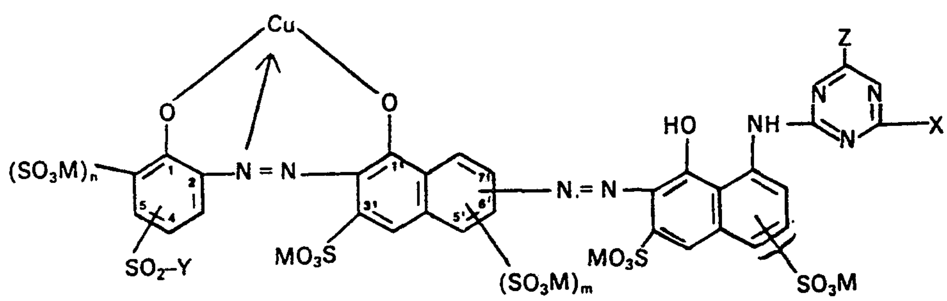

(1)

in which:

m is the number zero or 1 (and if m is 0, this group is hydrogen);

n is the number zero or 1 (and if n is 0, this group is hydrogen);

the groupe $-SO_2-Y$ is bonded to the benzene nucleus in the 5-position if n is zero, or is bonded to the benzene nucleus in the 4-position if n is zero or 1;

the free azo group can be bonded to the middle naphthalene nucleus in the 6'- oder 7'-position;

if m is 1, this sulfo group is bonded in the 5'-position if the azo group is in the 6'-position, and is bonded in the 6'-position if the azo group is in the 7'-position;

X is a chlorine atom or a group of the formula (2a), (2b) or (2c)

$$-O-R^1 \quad -S-R^2 \quad -N\begin{matrix}R^3\\R^4\end{matrix}$$

(2a) (2b) (2c)

in which

$R^1$ denotes a straight-chain or branched alkyl group of 1 to 4 carbon atoms which can be substituted, or an optionally substituted aryl radical, or represents a hydrogen atom,

$R^2$ denotes a straight-chain or branched alkyl

group of 1 to 4 carbon atoms which can be substituted, or represents an optionally substituted aryl radical,

$R^3$ is a hydrogen atom or denotes a straight-chain or branched alkyl group of 1 to 4 carbon atoms which can be substituted, and

$R^4$ is a hydrogen atom or represents a cycloalkyl group which can be substituted by 1 to 3 methyl groups, or denotes a straight-chain or branched alkyl group of 1 to 4 carbon atoms which can be substituted, or is an optionally substituted aryl radical,

and $R^3$ and $R^4$ can be identical or different, or

$R^3$ and $R^4$, as alkylene radicals of 1 to 4 carbon atoms, together with the nitrogen atomand optionally an oxygen, sulfur or nitrogen atom as a further heteroatom, form a heterocyclic 6-membered radical;

Y is the vinyl group or a group of the general formula

$$-CH_2-CH_2-R \qquad (2d)$$

in which

R denotes an inorganic or organic radical which can be eliminated under alkaline conditions;

Z is a chlorine atom;

M is a hydrogen atom or the equivalent of a metal.

2. Copper-complex disazo compounds according to claim 1, of the general formula

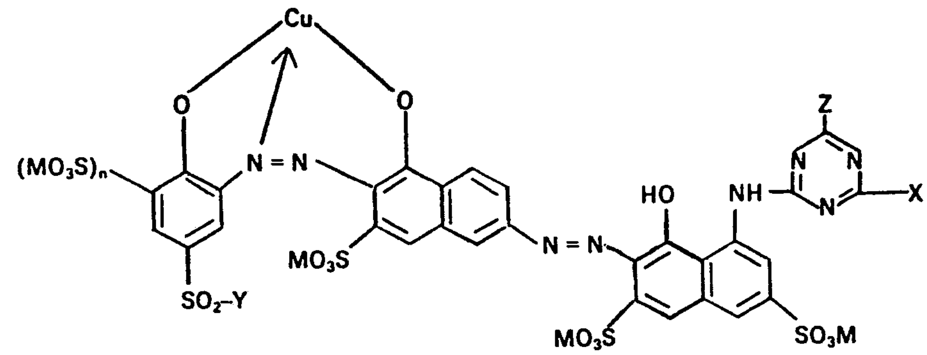

in which n, M, X, Y and Z have the meanings given in claim 1.

3. Copper-complex disazo compounds according to claim 1, of the general formula

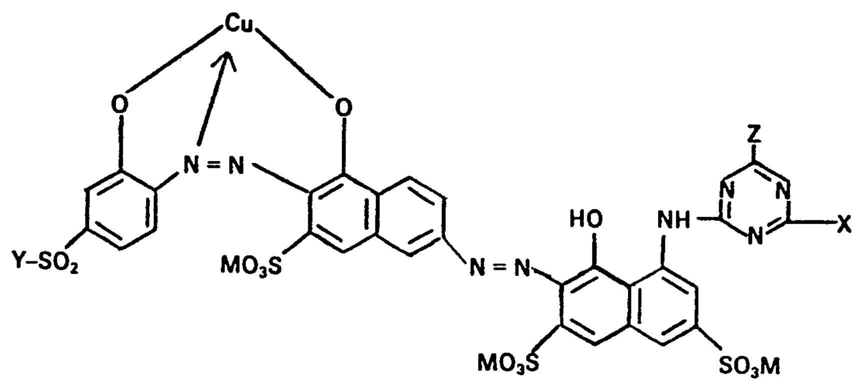

in which M, X, Y and Z have the meanings given in claim 1.

4. Copper-complex disazo compounds according to claim 1, of the general formula

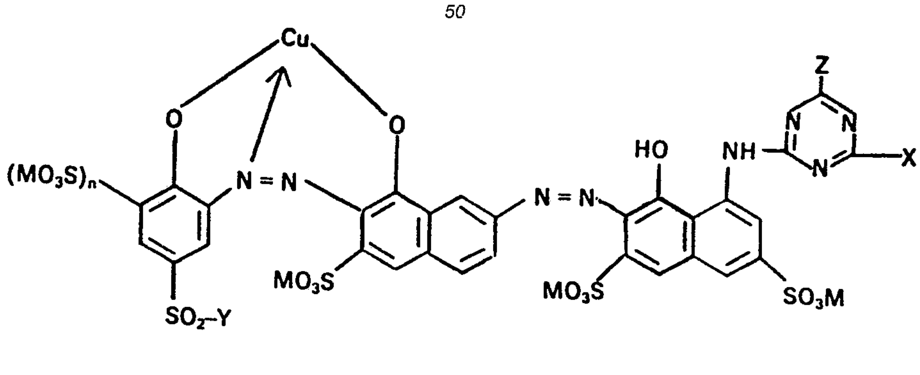

in which n, M, X, Y and Z have the meanings given in claim 1.

5. Copper-complex disazo compounds according to claim 1, of the general formula

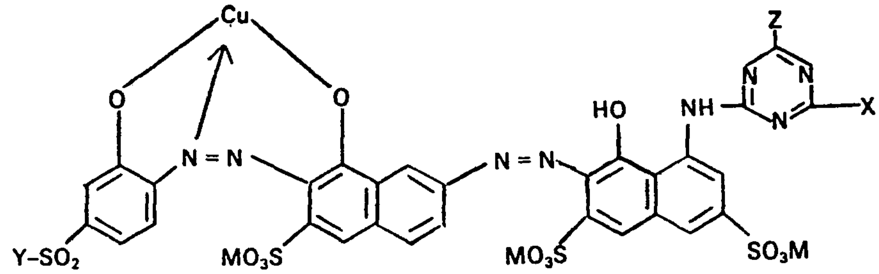

in which M, X, Y and Z have the meanings given in claim 1.

6. Copper-complex disazo compounds according to any of claims 1, 2, 3, 4 or 5, characterized by that X is a group of the general formula

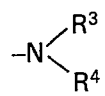

in which $R^3$ and $R^4$ have identical or different meanings and $R^3$ denotes a hydrogen atom or an alkyl group of 1 to 4 carbon atoms which can be substituted by one or two substituents from the group comprising acetylamino, hydroxy, sulfato, β-sulfatoethylsulfonyl, vinylsulfonyl, β-thiosulfatoethylsulfonyl, alkoxy with 1 to 4 carbon atoms, sulfo, carboxy, phenyl, naphthyl, phenyl which is substituted by sulfo, carboxy, β-sulfatoethylsulfonyl, vinylsulfonyl, β-thiosulfatoethylsulfonyl, alkyl with 1 to 4 carbon atoms, alkoxy with 1 to 4 carbon atoms, chlorine, sulfamoyl and/or carbamoyl, and naphthyl which is substituted by sulfo, carboxy, β-sulfatoethylsulfonyl, vinylsulfonyl, β-thiosulfatoethylsulfonyl, alkoxy with 1 to 4 carbon atoms, alkyl with 1 to 4 carbon atoms, chlorine, sulfamoyl and/or carbamoyl, and $R^4$ represents a hydrogen atom or a cyclopentyl or cyclohexyl group, which can be substituted by 1 to 3 methyl groups, or denotes an alkyl group of 1 to 4 carbon atoms which can be substituted by one or two substituents from the group comprising acetylamino hydroxy, sulfato, β-sulfatoethylsulfonyl, vinylsulfonyl, β-thiosulfatoethylsulfonyl, alkoxy with 1 to 4 carbon atoms, sulfo, carboxy, phenyl, naphthyl, phenyl which is substituted by sulfo, carboxy, β-sulfatoethylsulfonyl, vinylsulfonyl, β-thiosulfatoethylsulfonyl, alkyl with 1 to 4 carbon atoms, alkoxy with 1 to 4 carbon atoms, chlorine, sulfamoyl and/or carbamoyl, and naphthyl which is substituted by sulfo, carboxy, β-sulfatoethylsulfonyl, vinylsulfonyl, β-thiosulfatoethylsulfonyl, alkoxy with 1 to 4 carbon atoms, alkyl with 1 to 4 carbon atoms, chlorine, sulfamoyl and/or carbamoyl, or is a phenyl radical or naphthyl radical, which can be substituted by substituents from the group comprising carboxy, sulfo, alkyl with 1 to 4 carbon atoms, alkoxy with 1 to 4 carbon atoms, hydroxy, chlorine, β-sulfatoethylsulfonyl, vinylsulfonyl, β-thiosulfatoethylsulfonyl, alkanoylamino with 1 to 4 carbon atoms in the alkyl radical and carbalkoxy with 1 to 4 carbon atoms in the alkyl radical, or in which $R^3$ and $R^4$, together with the nitrogen atom, form the morpholine, thiomorpholine, piperazine or piperidine radical.

7. Compounds according to any of claims 1 to 6, characterized by that Y represents the β-sulfatoethyl or the vinyl group.

8. Compounds according to any of claims 1 to 7, characterized by that n denotes the number 1.

9. Compounds according to claim 1, of the general formula

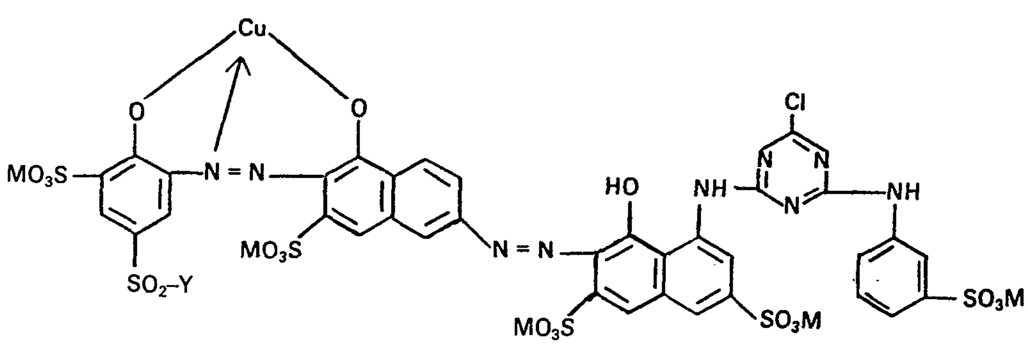

in which Y represents the β-sulfatoethyl or the vinyl group and M has the meaning given in claim 1.

10. Compound according to claim 1, of the general formula

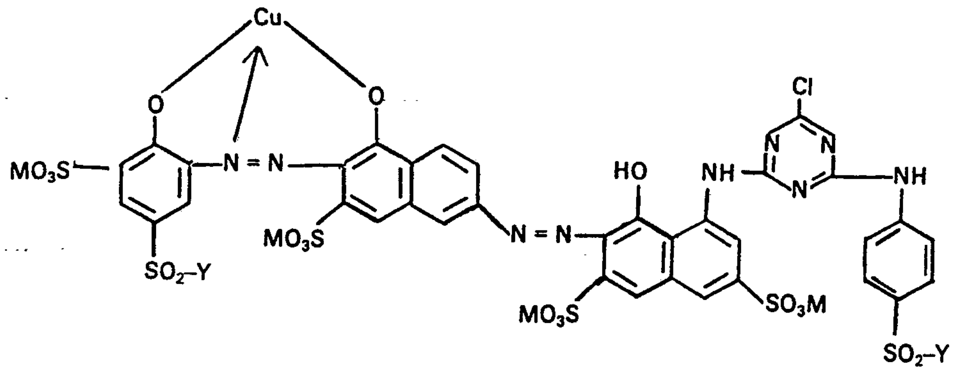

in which Y represents the β-sulfatoethyl or the vinyl group and M has the meaning given in claim 1.

11. Compound according to any of claims 1 to 10, characterized by that M represents sodium or potassium.

12. Processes for the preparation of copper-complex disazo compounds of the general formula (1) mentioned and defined in claim 1, characterized by that

a) a copper complex monoazo compound of the general formula (3)

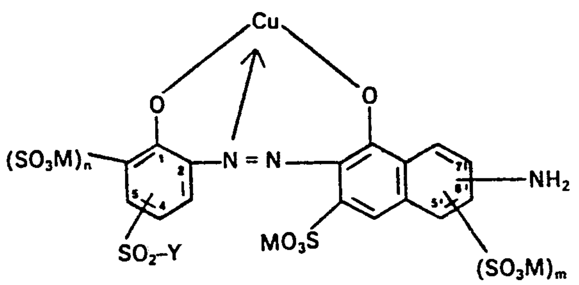

(3)

(in which m, n, Y and M have the meanings given in claim 1 and the free amino group is bonded in the 6'- oder 7'-position to the naphthalene nucleus where in the case that m is 1 this sulfo group is bonded in the 5'-position to the naphthalene nucleus if the amino group is in the 6'-position, and the sulfo group is bonded in the 6'-position to the naphthalene nucleus if the amino group is in the 7'-position) is diazotized and coupled with a compound of the general formula (4)

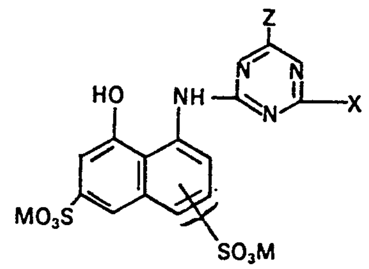

(4)

(in which M, X and Z have the meanings given in claim 1), or that

b) an o,o'-dihydroxy-azo compound of the formula (5)

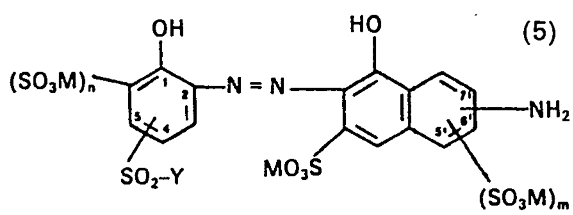

(5)

(in which M, Y, m, and n have the meanings given for formula (1) or formula (3) ), is diazotized and coupled with a compound of the general formula (4) mentioned above and defined, and this metal-free disazo compound is then treated with an copper-donating agent, or that

c) a disazo compound of the general formula (6)

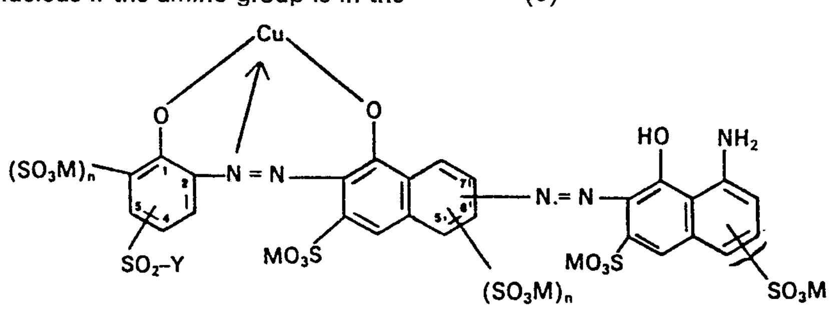

(6)

(in which M, Y, m and n have the meanings given in claim 1) is reacted with a dihalogeno-s-triazine compound of the general formula (7)

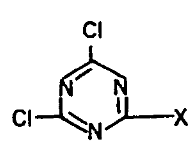

(7)

(in which X is a group of the formula (2a), (2b) or (2c) mentioned and defined in claim 1) or with cyanuric chloride, or that

d) a metal-free disazo compound of the general formula (8)

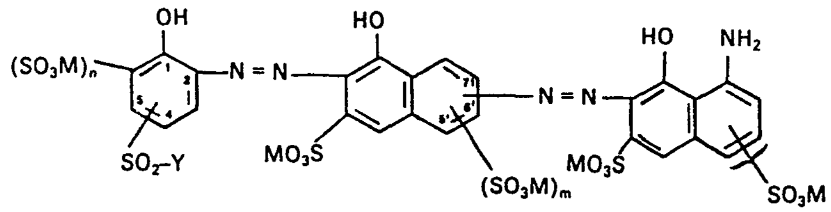

(8)

(in which M, Y, m and n have the meanings given in claim 1) is reacted with a dihalogeno-s-triazine compound of the general formula (7) mentioned above and defined, or with cyanuric chloride, and

is then treated with a copper-donating agent, or that

e) an azo compound of the general formula (9)

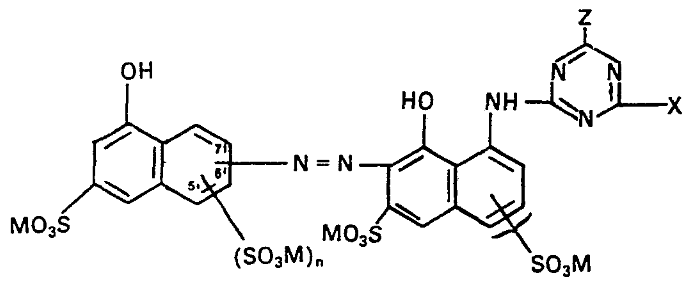

(9)

(in which M, m, X and Z have the meanings given in claim 1) is coupled with the diazonium compound of an aminophenol of the formula (10)

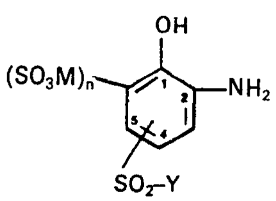

(10)

(in which Y and n have the meanings given in claim 1 and the group $-SO_2-Y$ is in the 4- or 5-position if n is zero, and is in the -position if n is 1) and the disazo compound is treated with a copper-donating agent, or that

f) a copper complex disazo compound of the general formula (11)

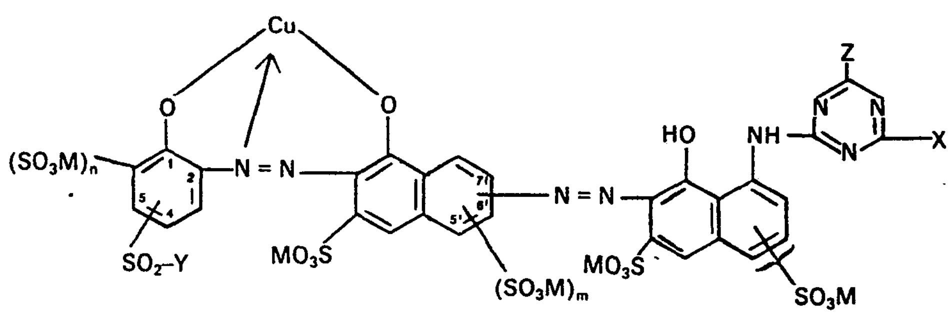

(11)

(in which M, m, n, Y and Z have the meanings given in claim 1 and X represents a chlorine atom) is reacted with a compound of the general formula (12)

H–X (12)

(in which X is a group of the formula (2a), (2b) or (2c) mentioned and defined in claim 1), or that

g) a metal-free o,o'-dihydroxy-disazo compound of the general formula (13)

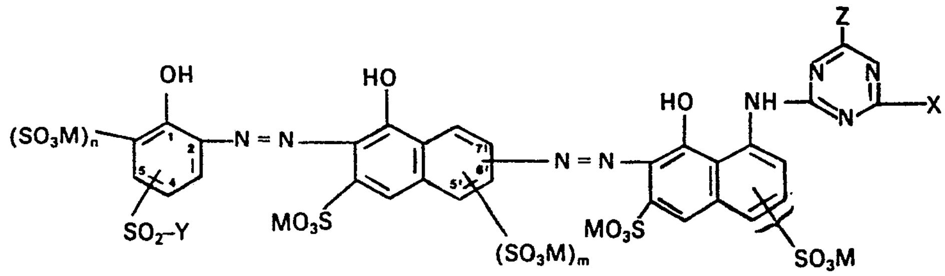

(13)

(in which M, m, n, Y, X and Z have the meanings given in claim 1) is treated with a copper-donating agent.

13. Use of the compounds of the general formula (1) mentioned and defined in claim 1 or prepared according to one of the processes of claim 12, for dyeing or printing materials containing hydroxy groups and/or carboxamide groups.